(19) Europäisches Patentamt / European Patent Office / Office européen des brevets

(11) **EP 4 742 010 A1**

(12) **EUROPEAN PATENT APPLICATION**

(43) Date of publication:
**13.05.2026 Bulletin 2026/20**

(21) Application number: **25202352.8**

(22) Date of filing: **16.09.2025**

(51) International Patent Classification (IPC):
**G06F 3/01** (2006.01)    **G06T 7/33** (2017.01)
**G06V 10/25** (2022.01)    **G06V 10/44** (2022.01)
**G06V 20/20** (2022.01)

(52) Cooperative Patent Classification (CPC):
**G06F 3/013; G06T 7/246; G06V 10/25;
G06V 10/44; G06V 20/20;** G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.11.2024 CN 202411598702**

(71) Applicant: **Kingfar International Inc.
Beijing 100080 (CN)**

(72) Inventors:
• **ZHAO, Qichao**
  **Beijing 100080 (CN)**
• **YANG, Ran**
  **Beijing 100080 (CN)**
• **WANG, Qingju**
  **Beijing 100080 (CN)**

(74) Representative: **DREISS Patentanwälte PartG
mbB
Friedrichstraße 6
70174 Stuttgart (DE)**

(54) **HUMAN-FACTORS INTELLIGENCE USER GAZE ANALYSIS METHOD, APPARATUS AND SYSTEM, AND EDGE COMPUTING DEVICE**

(57) Provided are a human-factors intelligence user gaze analysis method, apparatus, and system, and an edge computing device, which belong to the technical field of computer vision. The method includes: collecting visual data of a user's field of view through a camera of a head-mounted device, and collecting eye movement data of the user within the field of view through an eye tracker of the head-mounted device; identifying a target object in the visual data; determining target eye movement data associated with gaze on the target object in the eye movement data; and sending the target eye movement data to a target screen to correspondingly present the target eye movement data on the target object displayed on the target screen. Embodiments of the present disclosure improve efficiency of user visual behavior analysis.

FIG. 1

**Description**

**FIELD**

The present application belongs to the technical field of computer vision, and particularly relates to a human-factors intelligence user gaze analysis method, a human-factors intelligence user gaze analysis apparatus, a human-factors intelligence user gaze analysis system, and an edge computing device.

**BACKGROUND**

Eye tracking technology is widely applied in psychology, healthcare, advertising analysis, autonomous driving, and other fields. By tracking users' eye movements, it helps understand their attention distribution, decision-making behaviors, reaction speeds, etc.

Conventional eye tracking systems capture movement trajectories of users' eyes through cameras mounted on displays or devices to analyze their visual focuses. However, this technology mostly focuses on data analysis in the later stage. The corresponding annotation of the mapping of eye movement information on the target screen are carried out through manual annotation by annotators, resulting in low efficiency in analyzing users' visual behaviors.

**SUMMARY**

The present disclosure aims to solve at least one of the technical problems in the related art. To this end, the present disclosure provides a human-factors intelligence user gaze analysis method, a human-factors intelligence user gaze analysis apparatus, a human-factors intelligence user gaze analysis system, and an edge computing device, to improve efficiency of user visual behavior analysis.

In a first aspect, the present disclosure provides a human-factors intelligence user gaze analysis method. The method includes: collecting visual data of a user's field of view through a camera of a head-mounted device, and collecting eye movement data of the user within the field of view through an eye tracker of the head-mounted device; identifying a target object in the visual data; determining target eye movement data associated with gaze on the target object in the eye movement data; and sending the target eye movement data to a target screen to correspondingly present the target eye movement data on the target object displayed on the target screen.

With the human-factors intelligence user gaze analysis method according to the present disclosure, the visual data of the user's field of view is collected through the camera of the head-mounted device, and the eye movement data of the user within the field of view is collected through the eye tracker of the head-mounted device; the target object in the visual data is identified; the target eye movement data associated with gaze on the target object in the eye movement data is determined; and the target eye movement data is sent to the target screen to correspondingly present the target eye movement data on the target object displayed on the target screen. The embodiment of the present disclosure realizes effective identification of the target object gazed at by the user by collecting the visual data and the eye movement data, and displays the target eye movement data of the user on the target object on the target screen. The present disclosure can display the target eye movement data of the user on the target object on the target screen in real time without manually annotating target gaze data of the user on the target object, to perform real-time analysis of user's visual behavior on the target screen, enhancing the user interaction experience and improving efficiency of user visual behavior analysis.

According to an embodiment of the present disclosure, the method further includes: determining a two-dimensional marker to be used based on a scene; and deploying the two-dimensional marker at a key point of the target object, and recording a corresponding relationship among the target object, the key point, and the two-dimensional marker. Said identifying the target object in the visual data includes: locating a position of the target object in the visual data based on a position of the two-dimensional marker in the visual data and the corresponding relationship.

In this embodiment, by determining an appropriate two-dimensional marker based on needs of the scene, selection of the two-dimensional marker can change based on the scene, in such a manner that the two-dimensional marker has sufficient degree of identification and information capacity in the visual data under different scenes. In addition, by deploying the two-dimensional marker at the key point of the target object and recording the corresponding relationship, necessary reference information is provided for subsequent locating. In this way, a position of the target object can be accurately calculated based on the position of the two-dimensional marker in the visual data, improving accuracy of locating.

According to an embodiment of the present disclosure, said determining the two-dimensional marker to be used based on the scene includes: determining a size of a blank area in the two-dimensional marker based on the scene; the blank area being an area between an edge of the two-dimensional marker and a background area of the two-dimensional marker; and determining the two-dimensional marker to be used based on the size of the blank area.

In this embodiment, by determining appropriate size of the blank area based on the scene, a risk of misidentification can be reduced. This is because the blank area provides additional visual buffering, which helps to distinguish the two-dimensional marker from surrounding environment, and improves identification accuracy of two-dimensional marker.

According to an embodiment of the present disclosure, said determining the two-dimensional marker to be used based on the scene includes: determining an area ratio of a background area in the two-dimensional marker to the two-dimensional marker based on the scene; and determining the two-dimensional marker to be used based on the area ratio.

In this embodiment, by precisely controlling the area ratio of the background area in the two-dimensional marker to the marker itself, the two-dimensional marker in an image neither forms an excessively strong contrast with a background due to being too prominent, nor is difficult to be detected due to being too concealed, facilitating to improving efficiency of an algorithm in processing the image. This is because the algorithm can lock the target marker more quickly, which reduces processing of irrelevant background information. In addition, an appropriate area ratio can also enhance stability of the marker under different lighting and viewing angle conditions, in such a manner that reliable target locating can also be achieved under variable environmental conditions.

According to an embodiment of the present disclosure, the target object includes a plurality of key points. Said deploying the two-dimensional marker at the key point of the target object includes: selecting a plurality of non-collinear key points from the target object; deploying the two-dimensional marker at each of the plurality of non-collinear key points, and recording a corresponding relationship among the target object, each of the plurality of non-collinear key points, and the two-dimensional marker; or selecting a plurality of key points from the target object to form a polygon; deploying the two-dimensional marker at each of the plurality of key points that form the polygon, and recording a corresponding relationship among the target object, each of the plurality of key points that form the polygon, and the two-dimensional marker.

In this embodiment, by selecting the plurality of non-collinear key points from the target object and deploying two-dimensional marker at each of the plurality of non-collinear key points, an advantage of geometric distribution of non-collinear key points is utilized. Even if some markers fail to be identified due to occlusion or damage, the target object can still be located through other visible markers, reducing an impact of failure of a single marker on overall positioning accuracy. By using geometric properties of the polygon, a stable reference framework is provided for locating. Vertices (i.e. the key points) of the polygon are used as deployment positions of the two-dimensional markers. Even if some markers fail to be temporarily identified due to environmental factors (such as occlusion and changes in light), effective locating can still be performed based on other visible markers, improving the accuracy of locating.

According to an embodiment of the present disclosure, said locating the target object based on the position of the two-dimensional marker in the visual data and the corresponding relationship includes: performing feature extraction on the visual data; detecting the two-dimensional marker included in the visual data and the position of the two-dimensional marker in the visual data based on an extracted feature; locating the target object in the visual data based on the corresponding relationship and a detection result of the two-dimensional marker and the position of the two-dimensional marker in the visual data; or obtaining, in response to detecting that the number of two-dimensional markers in the visual data is less than the number of deployed two-dimensional markers, a position of an undetected two-dimensional marker by fitting based on a geometric positional relationship of the key point; and locating the target object based on a position of a detected two-dimensional marker in the visual data, the obtained position of the undetected two-dimensional marker, and the corresponding relationship.

In this embodiment, by performing the feature extraction on the visual data, the two-dimensional marker in the visual data can be identified and the position of the two-dimensional marker in the visual data can be detected. The target object can be accurately located in combination with the corresponding relationship. When the number of two-dimensional markers in the visual data is detected to be less than the number of deployed two-dimensional markers, position information of the detected two-dimensional markers and the geometric positional relationship of the key points can be used to predict a possible position of the undetected two-dimensional marker through fitting. In this way, a two-dimensional marker layout can also be reconstructed even when the two-dimensional marker is missing, which achieves effective locating of the target object, improving the accuracy of locating.

According to an embodiment of the present disclosure, the target screen includes a field of view partition and a target object partition. The field of view partition is configured to display the visual data and a position of the eye movement data in the visual data. The target object partition is configured to display the target object and a position of the target eye movement data on the target object.

In this embodiment, by dividing the target screen into the field of view partition and the target object partition, the field of view partition enables intuitive display of a relative position of the user's eye movement data within a whole field of view, which is conducive to analyzing user's visual focus distribution and visual path. In addition, the target object partition further focuses on a specific target gazed at by the user. By displaying a specific position of the target eye movement data on the target object, user's attention distribution and attention details on the target object can be more accurately understood, which not only enhances visual analysis of the user's gaze behavior, but also can provide guidance for designing user interfaces, optimizing advertising layouts, improving user experience, etc.

According to an embodiment of the present disclosure, said sending the target eye movement data to the target screen to correspondingly present the target eye movement data on the target object displayed on the target screen includes: obtaining position information of the target eye movement data on the target object; performing identification on the visual data to obtain position information of each marker pre-marked on the target object; determining a transformation relationship based on the position information of each marker; and substituting the position information of the target eye movement data on the target object into the transformation relationship to obtain target coordinates of the target eye movement data on the target object in the target screen.

In this embodiment, by performing identification on the visual data, position information of each identified marker helps to locate a specific position of the target object and an identification area including the target eye movement data. Obtaining the position information of the target eye movement data is helpful to accurately map the target eye movement data to the target screen. A mapping relationship between the target object and the target screen can be established through the position information of the marker, facilitating to accurately aligning the target object and the target screen in a mapping process, and allowing different marker layouts to adapt to different screen sizes and shapes. Subsequent to determining the transformation relationship, the position information of the target eye movement data can be mapped to the target screen in real time, which supports interaction with the target object. Also, corresponding response can be seen on the target screen, improving real-time performance of target point mapping.

According to an embodiment of the present disclosure, said determining the transformation relationship based on the position information of each marker includes: determining a first parameter set for calculating an abscissa of the target coordinates, a second parameter set for calculating an ordinate of the target coordinates, and a third parameter set for calculating a homogeneous coordinate normalization factor based on the position information of each marker; determining an expression of a first intermediate variable based on the third parameter set; obtaining a first expression for calculating the abscissa of the target coordinates based on the expression of the first intermediate variable and the first parameter set; and obtaining a second expression for calculating the ordinate of the target coordinates based on the expression of the first intermediate variable and the second parameter set, the first expression and the second expression constituting the transformation relationship.

In this embodiment, the mapping relationship between the target object and the target screen can be more accurately described by determining parameter sets of the abscissa, the ordinate, and the homogeneous coordinate normalization factor, respectively. Introduction of an intermediate variable can simplify final transformation relationship expression, making a calculation process more efficient. Through combination of an expression of the abscissa and an expression of the ordinate, a complete transformation relationship is formed, which ensures position consistency of the target eye movement data between the target object and the target screen. Subsequent to determining the transformation relationship, it can be reused multiple times, improving real-time performance and reusability of a system.

According to an embodiment of the present disclosure, four markers pre-marked on the target object are provided. Corresponding position information of the four markers is first coordinates, second coordinates, third coordinates, and fourth coordinates, respectively. Said determining the first parameter set for calculating the abscissa of the target coordinates, the second parameter set for calculating the ordinate of the target coordinates, and the third parameter set for calculating the homogeneous coordinate normalization factor based on the position information of each marker includes: calculating a second intermediate variable based on the second coordinates, the third coordinates, and the fourth coordinates; calculating a third intermediate variable based on the second intermediate variable, the first coordinates, the second coordinates, and the fourth coordinates; calculating a fourth intermediate variable based on the second intermediate variable, the first coordinates, the third coordinates, and the fourth coordinates; determining the first parameter set and the second parameter set based on the first coordinates, the second coordinates, the third coordinates, the third intermediate variable, and the fourth intermediate variable; and calculating the third parameter set based on the third intermediate variable and the fourth intermediate variable.

In this embodiment, a stable framework can be formed through four markers, which reduces mapping errors caused by differences in a shape, a size, resolution, and other factors of the target object, adapting to different types of configurations, having good versatility, and being easy to implement the calculation process based on clear mathematical expressions and intermediate variables.

According to an embodiment of the present disclosure, said determining the first parameter set and the second parameter set based on the first coordinates, the second coordinates, the third coordinates, the third intermediate variable, and the fourth intermediate variable includes: taking a product of a difference between an abscissa of the third coordinates and an abscissa of the first coordinates and the third intermediate variable as a first parameter, taking a product of a difference between an abscissa of the second coordinates and the abscissa of the first coordinates and the fourth intermediate variable as a second parameter, and taking the abscissa of the first coordinates as a third parameter, the first parameter, the second parameter, and the third parameter constituting the first parameter set; and taking a product of a difference between an ordinate of the third coordinates and an ordinate of the first coordinates and the third intermediate variable as a fourth parameter, taking a product of a difference between an ordinate of the second coordinates and the ordinate of the first coordinates and the fourth intermediate variable as a fifth parameter, and taking the ordinate of the first coordinates as a sixth parameter, the fourth parameter, the fifth parameter, and the sixth parameter constituting the second parameter set.

In this embodiment, an accurate mapping result can be provided by using the position information of four markers and performing specific mathematical operations such as product and difference to calculate parameters. Difference operation helps capture the relative positional relationship between different markers. The stability of the system can be improved using a plurality of markers as reference points and calculating parameter sets based on these reference points. Even if there is an error in the position detection of one of the plurality of markers, it can be corrected by the information of other markers, reducing an impact of the error on the mapping result.

According to an embodiment of the present disclosure, said performing identification on the visual data to obtain the position information of each marker pre-marked on the target object includes: identifying a marker area of each marker pre-marked on the target object from the visual data; and determining center point coordinates of each marker area in a coordinate system established based on the visual data to obtain the position information of each marker. Said determining the center point coordinates of each marker area includes: for each marker area in the visual data, determining coordinates of each point in a contour of the marker area, and calculating average coordinates of all points in the contour of the marker area to obtain the center point coordinates of the marker area.

In this embodiment, by using the coordinate system established based on the image, the marker can be accurately located, which ensures accuracy of the position information. Identifying the marker area of the marker and determining the center point coordinates can accurately reflect an actual position of the marker in the image. Calculating the average coordinates of all points on the contour as the center point coordinates takes into account an overall shape and size of the marker area, which can more accurately reflect the actual position of the marker. Compared with a method that only considers some points or specific points on the contour, an average coordinate method can better reduce the error and improve the accuracy of position information.

According to an embodiment of the present disclosure, said sending the target eye movement data to the target screen to correspondingly present the target eye movement data on the target object displayed on the target screen includes: obtaining a first image block including the target eye movement data in a first video frame of the visual data; calculating, in response to the first image block satisfying a predetermined condition, a coordinate mapping relationship between the first video frame and a second video frame in the target screen based on the first image block; and mapping the target eye movement data to the second video frame based on the coordinate mapping relationship.

In this embodiment, by obtaining an image block including the target eye movement data, and by calculating, in response to the image block satisfying the predetermined condition, the coordinate mapping relationship between the first video frame and the second image frame, the calculation process focuses more on an area related to the target eye movement data in the image instead of an entire first video frame, reducing influence of environmental changes on the calculation process, and improving calculation accuracy of coordinate mapping relationship. Therefore, accuracy of eye movement tracking is improved.

According to an embodiment of the present disclosure, said obtaining the first image block including the target eye movement data in the first video frame of the visual data includes: determining a position of the target eye movement data in the first video frame; and determining an area within a first predetermined range centered on the position of the target eye movement data in the first video frame as the first image block.

In this embodiment, by accurately identifying the position of the target eye movement data and by determining the first image block based on the position of the target eye movement data, processing of irrelevant areas in an image can be reduced, in such a manner that the calculation process can focus on areas near the target eye movement data, reducing invalid calculation in irrelevant areas and improving calculation efficiency and accuracy.

According to an embodiment of the present disclosure, the predetermined condition includes: the number of matching points in an image block being greater than or equal to a predetermined number, and/or a plurality of matching points in the image block being not collinear. The method further includes: obtaining, in response to the first image block not satisfying the predetermined condition, a second image block including the target eye movement data in the first video frame; and/or the method further includes: calculating, in response to the second image block satisfying the predetermined condition, the coordinate mapping relationship between the first video frame and the second video frame in the target screen based on the second image block.

In this embodiment, by setting the predetermined condition that requires the number of matching points to be greater than or equal to the predetermined number and the plurality of matching points to be not collinear, there are sufficient matching points to calculate the coordinate mapping relationship. The condition that the plurality of matching points are not collinear enables the matching points to provide sufficient geometric information to solve the coordinate mapping relationship between the first video frame and the second video frame, further improving accuracy of target eye movement data mapping.

In this embodiment, by obtaining, in response to the first image block not satisfying the predetermined condition, the second image block including the target eye movement data in the first video frame, even if a sufficient number of matching points or matching points with appropriate distribution cannot be found within a range of the first image block, the possibility of finding effective matching points can be increased by adjusting a search area, enhancing flexibility and a success rate of a target eye movement data mapping process.

According to an embodiment of the present disclosure, said obtaining the second image block including the target eye movement data in the first video frame includes: obtaining the second image block based on a position of the first image block in the first video frame; or determining a position of the target eye movement data in the first video frame; determining the area within a second predetermined range centered on the position of the target eye movement data in the first video frame as the second image block; the second predetermined range being larger than a first predetermined range.

In this embodiment, by obtaining the second image block based on the position of the first image block in the first video frame, a new search range can be re-determined with the first image block as a reference, improving efficiency of a target eye movement data mapping calculation process.

In this embodiment, by expanding the first image block into the second image block, even if a sufficient number of matching points or matching points with appropriate distribution cannot be found within an initial search range, the possibility of finding effective matching points can be increased by expanding the search area, enhancing the flexibility and the success rate of the target eye movement data mapping process.

According to an embodiment of the present disclosure, the method further includes, prior to obtaining the first image block including the target eye movement data in the first video frame of the visual data: performing feature point matching on the first video frame and the second video frame in the target screen, and reselecting, in response to a matching failure between the first video frame and the second video frame, a video frame from the visual data to replace the first video frame and performing the feature point matching on the reselected video frame and the second video frame.

In this embodiment, when it fails to successfully establish an accurate corresponding relationship between the first video frame and the second video frame by the feature point matching, a new video frame can be flexibly selected as the first video frame from a continuous video stream, reducing a risk of interruption of an entire eye tracking process due to a single matching failure, and improving continuity of the system.

According to an embodiment of the present disclosure, said reselecting the video frame from the visual data to replace the first video frame and performing feature point matching on the reselected video frame and the second video frame includes: determining a video frame adjacent to the first video frame in the visual data or another video frame in the visual data as the reselected video frame.

In this embodiment, when the feature point matching between the first video frame and the second video frame fails, the video frame adjacent to the current first video frame is selected from the target video stream as a substitute, for re-performing feature point matching, allowing the reselected video frame to maintain temporal continuity. Alternatively, other video frames are selected as the substitute, improving stability and accuracy of the eye tracking process.

According to an embodiment of the present disclosure, said performing the feature point matching on the first video frame and the second video frame in the target screen includes: inputting the first video frame and the second video frame into a predetermined neural network model, such that the neural network model extracts feature points of the first video frame and the second video frame and performs matching based on extracted feature points; or said performing the feature point matching on the first video frame and the second video frame in the target screen includes: preprocessing the first video frame and the second video frame, the preprocessing including removing feature points within a predetermined range of a boundary of the first video frame and removing feature points within a predetermined range of a boundary of the second video frame; and performing feature point matching on a pre-processed first video frame and a pre-processed second video frame; and/or inputting the pre-processed first video frame and the pre-processed second video frame into a predetermined neural network model, such that the neural network model extracts feature points of the preprocessed first video frame and the preprocessed second video frame and performs matching based on extracted feature points.

In this embodiment, by performing the feature point matching on the first video frame and the second video frame using the predetermined neural network model, powerful feature extraction capability of deep learning can be utilized to improve accuracy and efficiency of matching.

In this embodiment, by removing feature points within a predetermined range of an image boundary, a negative impact on the accuracy of matching due to noise or incompleteness in an image boundary region can be reduced, which allows greater focus on the more stable and information-rich regions in the image, improving the accuracy of matching.

According to an embodiment of the present disclosure, the method further includes: storing the feature point of the second video frame extracted by the neural network model. Said reselecting the video frame from the visual data to replace the first video frame and performing feature point matching on the reselected video frame and the second video frame includes: inputting a first video frame after replacing into a predetermined neural network model, such that the neural network model extracts a feature point of the first video frame and performs matching based on the feature point of the first video frame and the stored feature point of the second video frame.

In this embodiment, features of the second video frame are extracted through the neural network model and are stored. When other video frame images are matched with the second video frame, the feature point of the second video frame can be called for performing feature matching. Therefore, there is no need to repeatedly extract the features of the second video frame, improving processing efficiency.

According to an embodiment of the present disclosure, said calculating the coordinate mapping relationship between the first video frame and the second video frame in the target screen based on the first image block includes: obtaining first position coordinates of a matching point in the first image block in the first video frame and second position coordinates of the matching point in the second video frame; and calculating a homography matrix corresponding to the matching point based on the first position coordinates and the second position coordinates, the homography matrix representing the coordinate mapping relationship.

In this embodiment, by calculating corresponding position coordinates of a matching point in the first video frame and the second video frame, a mathematical model can be established to describe a spatial relationship between these matching points, and the homography matrix can be determined based on this for representing the coordinate mapping relationship. Using the homography matrix to represent the coordinate mapping relationship can adapt to complex image transformation situations, improving accuracy and robustness of the target eye movement data mapping.

According to an embodiment of the present disclosure, the method further includes: obtaining target eye movement data of a plurality of users associated with gazes on a same target object; and analyzing a multi-user gaze behavior based on the target eye movement data corresponding to the plurality of users.

In this embodiment, by analyzing the multi-user gaze behavior based on the target eye movement data corresponding to the plurality of users, an ability to analyze behavior of a group of users is improved.

According to an embodiment of the present disclosure, said analyzing the multi-user gaze behavior based on the target eye movement data corresponding to the plurality of users includes: sending the target eye movement data corresponding to the plurality of users to the target screen, to superimpose and present the target eye movement data corresponding to the plurality of users at the target object displayed on the target screen.

In this embodiment, by superimposing and displaying the target eye movement data corresponding to the plurality of users on the target screen, researchers and designers can intuitively observe and compare common gaze points and gaze patterns of different users when gazing at the same target object, identifying a general interest region or hotspot of a group of users.

According to an embodiment of the present disclosure, said analyzing the multi-user gaze behavior based on the target eye movement data corresponding to the plurality of users includes: analyzing an eye movement trajectory and/or an eye movement point heat map of the plurality of users based on the target eye movement data corresponding to the plurality of users, to obtain a primary viewing position of the plurality of users and a habitual operation process of the plurality of users when performing a predetermined operation; and optimizing a scene based on the primary viewing position of the plurality of users and the habitual operation process of the plurality of users when performing the predetermined operation.

In this embodiment, by analyzing the eye movement trajectory and the eye movement point heat map of the plurality of users, the primary viewing position and the habitual operation process of the plurality of users can be revealed, realizing an in-depth understanding of user's behavior patterns. This embodiment provides a quantitative means to evaluate and optimize interactive experience between the user and the product or service. By identifying the common gaze point and the gaze pattern, designers can optimize an interface layout, in such a manner that key information and functions conform to user's natural line-of-sight flow and operational habits, improving user satisfaction and operation efficiency.

In a second aspect, the present disclosure provides a human-factors intelligence user gaze analysis apparatus. The apparatus includes: a collection module configured to collect visual data of a user's field of view through a camera of a head-mounted device, and collect eye movement data of the user within the field of view through an eye tracker of the head-mounted device; an identification module configured to identify a target object in the visual data; a determination module configured to determine target eye movement data associated with gaze on the target object in the eye movement data; and a display module configured to send the target eye movement data to a target screen to correspondingly present the target eye movement data on the target object displayed on the target scree.

With the human-factors intelligence user gaze analysis apparatus according to the present disclosure, the visual data of the user's field of view is collected through the camera of the head-mounted device, and the eye movement data of the user within the field of view is collected through the eye tracker of the head-mounted device; the target object in the visual data is identified; the target eye movement data associated with gaze on the target object in the eye movement data is determined; and the target eye movement data is sent to the target screen to correspondingly present the target eye movement data on the target object displayed on the target screen. The embodiment of the present disclosure realizes effective identification of the target object gazed at by the user by collecting the visual data and the eye movement data, and displays the target eye movement data of the user on the target object on the target screen. The present disclosure can display the target eye movement data of the user on the target object on the target screen in real time without manually annotating target gaze data of the user on the target object, to perform real-time analysis of user's visual behavior on the target screen, enhancing the user interaction experience and improving efficiency of user visual behavior analysis.

In a third aspect, the present disclosure provides an edge computing device. The edge computing device includes: a processor; a memory; and a computer program stored on memory and executable by the processor. The processor, when executing the computer program, implements the above-described human-factors intelligence user gaze analysis method in the first aspect.

According to an embodiment of the present disclosure, the edge computing device includes a head-mounted edge computing device. The head-mounted edge computing device includes a camera and an eye tracker.

In a fourth aspect, the present disclosure provides a human-factors intelligence user gaze analysis system. The system includes: a target screen, and the above-described edge computing device in the third aspect.

In a fifth aspect, the present disclosure provides a computer-readable storage medium having a program or instructions stored thereon. The program or instructions, when executed by a processor, implements the above-described human-factors intelligence user gaze analysis method in the first aspect.

In a sixth aspect, the present disclosure provides a chip. The chip includes a processor and a communication interface coupled to the processor. The processor is configured to run a program or instructions to implement the above-described human-factors intelligence user gaze analysis method in the first aspect.

In a seventh aspect, the present disclosure provides a computer program product including a computer program. The computer program, when executed by the processor, implements the above-described human-factors intelligence user gaze analysis method in the first aspect.

One or more of the above-described technical solutions in the embodiments of the present disclosure have at least one of the following technical effects:

With the human-factors intelligence user gaze analysis method according to the present disclosure, the visual data of the user's field of view is collected through the camera of the head-mounted device, and the eye movement data of the user within the field of view is collected through the eye tracker of the head-mounted device; the target object in the visual data is identified; the target eye movement data associated with gaze on the target object in the eye movement data is determined; and the target eye movement data is sent to the target screen to correspondingly present the target eye movement data on the target object displayed on the target screen. The embodiment of the present disclosure realizes effective identification of the target object gazed at by the user by collecting the visual data and the eye movement data, and displays the target eye movement data of the user on the target object on the target screen. The present disclosure can display the target eye movement data of the user on the target object on the target screen in real time without manually annotating target gaze data of the user on the target object, to perform real-time analysis of user's visual behavior on the target screen, enhancing the user interaction experience and improving efficiency of user visual behavior analysis.

Additional aspects and advantages of the present disclosure will be provided in part in the following description, or in part will become apparent from the following description or can be learned from practicing of the present disclosure.

**BRIEF DESCRIPTION OF THE DRAWINGS**

In order to clearly explain technical solutions of embodiments of the present disclosure, drawings used in the embodiments are briefly described below. It should be understood that the drawings as described below merely illustrate some embodiments of the present disclosure, and should not be construed as limiting the scope. Based on these drawings, other drawings can be obtained by those skilled in the art without inventive effort.

FIG. 1 is a schematic flowchart of a human-factors intelligence user gaze analysis method according to an embodiment of the present disclosure.

FIG. 2 is a schematic diagram of a two-dimensional marker according to an embodiment of the present disclosure.

FIG. 3 is a schematic diagram of a field of view partition and a target object partition according to an embodiment of the present disclosure.

FIG. 4 is a schematic diagram of a target eye movement data mapping process according to an embodiment of the present disclosure.

FIG. 5 is a schematic structural diagram of a human-factors intelligence user gaze analysis apparatus according to an embodiment of the present disclosure.

FIG. 6 is a schematic structural diagram of an edge computing device according to an embodiment of the present disclosure.

**DETAILED DESCRIPTION**

Technical solutions according to embodiments of the present disclosure will be described clearly below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art shall fall within the protection scope of the present disclosure.

The expressions such as "first" and "second" in the specification of the present disclosure are used to distinguish similar objects, rather than to describe a specific sequence or order. It should be understood that data used in this way can be interchanged with each other under appropriate circumstances, such that the described embodiments of the present disclosure can be implemented in a sequence other than those illustrated in the figures or described in the present disclosure. Further, that objects distinguished by "first", "second", etc. belongs to one class generally, and the number of objects is not limited. For example, the first object can be one or more. In addition, "and/or" in the specification represents at least one of the connected objects, and the symbol "/" generally indicates an "or" relationship between the correlated objects preceding and succeeding the symbol.

It should be noted that, in optional embodiments of the present disclosure, when the embodiments of the present disclosure are applied to specific products or technologies, the related data such as the object information involved needs to obtain the permission or consent of the object, and the collection, use, and processing of the related data need to comply with the relevant laws, regulations, and standards of the relevant countries and regions. That is to say, if data related to the object is involved in the embodiments of the present disclosure, the data is obtained with the authorized consent of the object, the authorized consent of the relevant departments, and in compliance with the relevant laws, regulations, and standards of the country and the region. If personal information is involved in the embodiments, all personal information must be obtained with the individual's consent. If sensitive information is involved, it is necessary to obtain the separate consent of the information subject. In addition, the embodiments must be implemented with the authorized consent of the object.

A human-factors intelligence user gaze analysis method, apparatus, and system, and an edge computing device according to the embodiments of the present disclosure are described in detail below through specific embodiments and application scenarios in combination with the drawings.

The human-factors intelligence user gaze analysis method can be applied to a terminal, and can be specifically executed by hardware or software in the terminal.

The terminal includes, but is not limited to, a portable communication device such as a mobile phone or a tablet computer with a touch-sensitive surface (e.g., a touch-screen display and/or a touchpad). It should also be understood that, in some embodiments, the terminal can not be a portable communication device, but a desk computer with a touch-sensitive surface (e.g., a touch-screen display and/or a touchpad).

In each of the following embodiments, a terminal including a display and a touch-sensitive surface is described. However, it should be understood that, the terminal can include one or more other physical user interface devices such as a physical keyboard, a mouse, and a joystick.

With the human-factors intelligence user gaze analysis method according to the embodiments of the present disclosure, an execution subject of the human-factors intelligence user gaze analysis method can be the edge computing device or a functional module or a functional entity capable of implementing the human-factors intelligence user gaze analysis method in the edge computing device. The edge computing device mentioned in the embodiments of the present disclosure can be a portable device (such as a mobile phone and a tablet computer), a wearable device (such as a smart watch and a smart bracelet), an eye tracker, an Augmented Reality (AR)/Virtual Reality (VR)/Extended Reality (XR)/Mixed Reality (MR) device, an edge server, an edge gateway, a vehicle-mounted device, a cloud computing device, etc. The human-factors intelligence user gaze analysis method according to the embodiments of the present disclosure is described below by taking the edge computing device being the execution subject as an example.

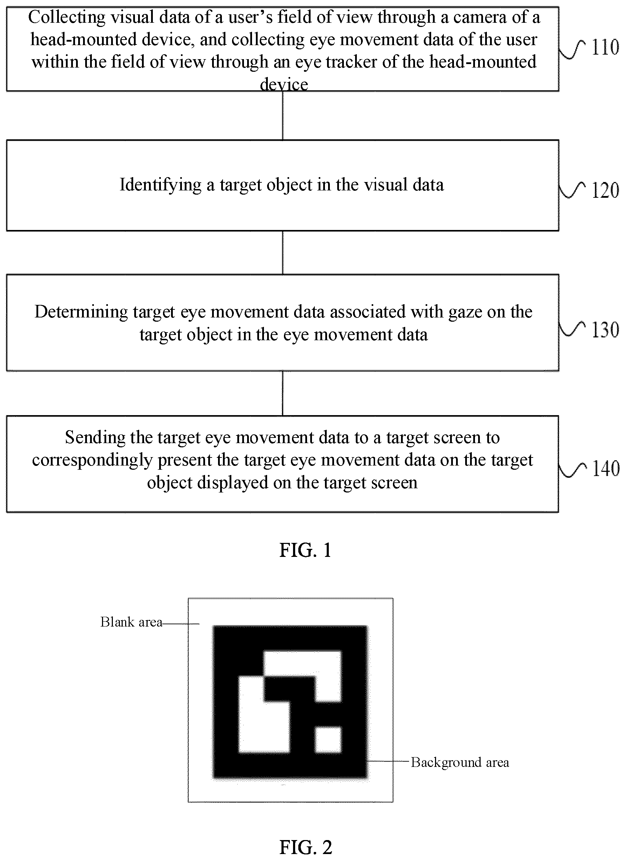

As illustrated in FIG. 1, the human-factors intelligence user gaze analysis method includes an operation at block 110, an operation at block 120, an operation at block 130, and an operation at block 140.

At block 110, visual data of a user's field of view is collected through a camera of a head-mounted device, and eye movement data of the user within the field of view is collected through an eye tracker of the head-mounted device.

In the embodiment of the present disclosure, the visual data of the user's field of view is collected through the camera of the head-mounted device. The visual data is equivalent to things that eyes of the user wearing the head-mounted device see, that is, things within the user's field of view. The visual data can be an image or a video. The eye movement data can be data related to user's eye gaze, for example, the eye movement data can be data such as an eye movement gaze point, a gaze direction, and a gaze trajectory.

In the embodiment of the present disclosure, the eye movement data can be data related to user's eye movements captured by the eye tracker of the head-mounted device, and the visual data can be data obtained by capturing things within the user's field of view through the camera of the head-mounted device. For example, the eye tracker can be a wearable eye tracker, a screen-based eye tracker, a head-mounted eye tracker, etc. The eye tracker can capture a real-time state of the eyes, such as pupils and corneal reflection, to obtain the eye movement data, and the camera can capture the real-time state of things within the field of view, to obtain the data of field of view.

In a scene, the visual data and the eye movement data can be collected through the head-mounted device. In an exemplary embodiment, the camera and the eye tracker can be disposed at the head-mounted device. The camera is responsible for collecting image or video data of the user's field of view, and the eye tracker synchronously collects the eye movement data, such as a gaze point, an eye movement trajectory, and gaze duration, of the user within the field of view.

At block 120, a target object in the visual data is identified.

In the embodiment of the present disclosure, the human-factors intelligence user gaze analysis method according to the embodiments of the present disclosure can be applied to a variety of scenes, such as user gaze analysis in scenes of augmented reality, industrial automation, robot navigation, driving simulator, advertisement marketing, education and entertainment, and user experience. Of course, the human-factors intelligence user gaze analysis method can also be applied to other scenes, which are not limited in the embodiments of the present disclosure. Depending on the scenes, the target objects can be different. For example, in a driving simulator scenes, the target object can be a screen; in a mechanical arm identification scenes with multiple inflection points, the target object can be a mechanical arm; in a robot navigation scenes, the target object can be a turning point, an intersection, or a specific task area on a navigation path; and in an advertisement and marketing scene, the target object can be a certain product or a certain product advertisement, etc. The target object is not limited in the embodiments of the present disclosure.

The target object is an object of gaze analysis. For example, in a simulated driving scene, the target object is a central control screen or different areas of the central control screen, and the user can gaze at different areas of the screen to complete some operations, such as turning on an air conditioner, playing music, and adjusting a driving mode.

In the embodiment of the present disclosure, a conventional image processing technology can be used to identify the target object based on the visual data. For example, the visual data is prepared through preprocessing steps such as graying and filtering for denoising. Image features of the visual data are extracted using algorithms such as edge detection and corner detection. The target object is separated from the background by image segmentation technologies such as a threshold method or a region growing method. Feature matching and classic classifiers, such as Support Vector Machine (SVM) or Adaboost, are used to identify and classify the target object, in such a manner that the target object in the visual data is identified and a position of the object target in the visual field is determined. Alternatively, an identification model can be pre-trained using a deep learning algorithm, and is deployed in practical applications. By inputting the visual data into the identification model, the target object in the visual data and the position of the target object in the visual field output by the model can be obtained. Of course, the target object in the visual data can be identified by any other methods, which is not limited in the embodiments of the present disclosure.

At block 130, target eye movement data associated with gaze on the target object in the eye movement data is determined.

In the embodiment of the present disclosure, the position and movement of the user's eyes can be captured by the eye tracker. Reflection features of the pupil and the cornea are extracted by using the reflection generated when light irradiates into the eyes, and a direction of the line of sight can be calculated by analyzing a pupil position and a corneal reflection point. Using a geometric principle and in combination with an eye structure and a light path, a specific position of the eye movement data in the visual data can be deduced.

Subsequent to identifying the target object in the visual data, a position of the target object in the visual data can be determined. Whether the eye movement data is on the target object can be determined based on the position of the eye movement data in the visual data and the position of the target object in the visual data. If the eye movement data is on the target object, the eye movement data can be determined as the target eye movement data associated with gaze on the target object.

At block 140, the target eye movement data is sent to a target screen to correspondingly present the target eye movement data on the target object displayed on the target screen.

In the embodiment of the present disclosure, the target screen can be any device with a display function. For example, the target screen can be a computer screen, a mobile phone screen, or a central control screen, or the target screen can be a screen on the head-mounted device, or other types of screens, which is not limited in the embodiments of the present disclosure.

In an embodiment of the present disclosure, the target screen can display the target object. It should be noted that, the target object displayed on the target screen can be a target object captured from a visual perspective different from or the same as that of the visual data, and the target object displayed on the target screen is not displayed subsequent to receiving the target eye movement data, but has been displayed in advance. One of objectives of the embodiments of the present disclosure is to map the eye movement data of the user's visual data with respect to the target object to the same target object displayed on the target screen, analyzing the user's gaze behavior on the target object.

In an embodiment of the present disclosure, the target eye movement data can be sent to the target screen, and the target screen displays the target eye movement data on the target object that the target screen displays. In this way, the eye movement data of the user's visual data with respect to the target object is mapped to the same target object displayed on the target screen, to facilitate analysis of the user's gaze behavior. For example, the position of the target eye movement data on the target object can be indicated by a marker (such as a dot and a cross dot).

Of course, to further clearly display the target eye movement data and the position of the target object to the user or an observer, information such as gaze duration, gaze frequency, and the gaze trajectory can also be displayed on the target screen.

In some embodiments, the target object displayed on the target screen can be a target object identified from the visual data. The content displayed on the target screen can be the same as the visual data or partially the same as the visual data. For example, the content displayed on the target screen can be a close-up of the target object, that is, the content displayed on the target screen is mainly concentrated on the target object. A difference between the content displayed on the target screen and the visual data can be that a viewing angle of the displayed target object is different, or that other content including the target object is displayed, etc.

In different application scenes, the target object can be different. For example, in the simulated driving scene, the target object can be a driving screen; in the mechanical arm identification scene with multiple inflection points, the target object can be the mechanical arm; in the robot navigation scene, the target object can be the turning point, the intersection, or the specific task area on the navigation path. In other application scenes, the target object can be other items, advertisements, etc., and is not limited in the embodiments of the present disclosure.

In the simulated driving scene, for a case of single-user analysis, the central control screen can be used as the target screen, and the target eye movement data of the user on the target object can be mapped to the central control screen for display and analysis, or the target eye movement data of the user on the target object can be mapped to another video including the target object for display and analysis. For a case of multi-user analysis, since the visual data and the eye movement data collected for different users vary, the target eye movement data of different users on the target object can be emphatically displayed on the target screen, performing the multi-user gaze behavior analysis on the target object.

With the human-factors intelligence user gaze analysis method according to the present disclosure, the visual data of the user's field of view is collected through the camera of the head-mounted device, and the eye movement data of the user within the field of view is collected through the eye tracker of the head-mounted device; the target object in the visual data is identified; the target eye movement data associated with gaze on the target object in the eye movement data is determined; and the target eye movement data is sent to the target screen to correspondingly present the target eye movement data on the target object displayed on the target screen. The embodiment of the present disclosure realizes effective identification of the target object gazed on by the user by collecting the visual data and the eye movement data, and displays the target eye movement data of the user on the target object on the target screen. The present disclosure can display the target eye movement data of the user on the target object on the target screen in real time without manually annotating target gaze data of the user on the target object, to perform real-time analysis of user's visual behavior on the target screen, enhancing the user interaction experience and improving efficiency of user visual behavior analysis.

In some embodiments, the method further includes: determining a two-dimensional marker to be used based on a scene; and deploying the two-dimensional marker at a key point of the target object, and recording a corresponding relationship among the target object, the key point, and the two-dimensional marker.

Said identifying the target object in the visual data includes: locating a position of the target object in the visual data based on a position of the two-dimensional marker in the visual data and the corresponding relationship.

In this embodiment, the two-dimensional marker is a pattern created in a two-dimensional space using a specific encoding method, and this pattern can be used to store and transmit information. The two-dimensional marker can usually be composed of black and white squares or dot matrices, and can be identified and decoded by scanning devices such as a smart phone or a scanner, to obtain the information stored in the two-dimensional marker. Design of two-dimensional marker enables more data to be stored in a limited space. Compared with a conventional one-dimensional barcode, the two-dimensional marker provides higher data density and information capacity. In this embodiment, the two-dimensional marker can be a two-dimensional bar code, a data matrix, an Aztec Code, or a two-dimensional marker designed based on other encoding methods, which is not limited in the embodiments of the present disclosure.

In this embodiment, the two-dimensional marker to be used can be determined based on the scene. For example, different scenes usually correspond to different environments, and the two-dimensional marker to be used can be determined based on special effects of different scenes. Some scenes can correspond to outdoor environments with strong or complex lighting, so two-dimensional markers with high contrast and good reflective characteristics can be selected. Some scenes can correspond to environments with cluttered backgrounds, so two-dimensional markers with unique pattern designs and easy to be distinguished can be selected. Some scenes can correspond to dynamic environments, so markers that can be quickly identified and are insensitive to blurring and movement can be selected, etc.

In some embodiments, a type of two-dimensional marker that matches the scene can be selected. In this embodiment, the type of two-dimensional marker can refer to two-dimensional markers of different types. For example, the type of two-dimensional marker can be the two-dimensional bar code, the data matrix, the Aztec Code, or the two-dimensional marker designed based on other encoding methods.

The type of two-dimensional marker can mark two-dimensional markers with different forms of expression within the same category of two-dimensional markers. For example, if the two-dimensional marker is an Augmented Reality University of Cordoba (ArUco) code, the type of two-dimensional marker can be a marker pattern of the ArUco code. For example, an ArUco library provides a variety of different marker patterns, which are mainly distinguished by the number of squares and the number of sub-squares in each square. The ArUco code is a binary square fiducial marker, and consists of a wide black background and an internal white binary matrix. The size of the ArUco code and the size of the internal matrix determine an identifier of the marker, that is, each ArUco code has a unique ID. In addition to ID identification, the ArUco code can also be used to accurately estimate position and orientation of the camera relative to the marker.

The key points of the target object can be those positions on the target object that have unique geometric features, are easy to be identified, and are relatively consistent under different viewing angles. The key points can be a corner point, an edge intersection point, a center point, or other significant geometric positions of the target object. For example, in a multi-screen identification scene of a driving simulator, the key point can be a corner of the screen, or in the mechanical arm identification scene with multiple inflection points, the key point can be a joint of the mechanical arm. Selection of the key point is crucial for subsequent identification and localization, as the key point provides a stable positional reference framework.

In this embodiment, subsequent to selecting the key point, the two-dimensional marker can be deployed at the key point. For example, the two-dimensional marker can be attached to the key point by pasting.

In this embodiment, a database or data structure can be created in advance to store the corresponding relationship among the target object, the key point, and the two-dimensional marker. For each key point, its specific position on the target object is recorded, for example, which can be coordinate information. Each two-dimensional marker is associated with the specific position where the two-dimensional marker is deployed at the key point, and this corresponding relationship is recorded. For example, the corresponding relationship can be: target object A-key point a1-two-dimensional marker a11, target object A-key point a2-two-dimensional marker a21, target object B-key point b1-two-dimensional marker b11, etc.

In this embodiment, a computer vision algorithm, such as edge detection, feature matching, or pattern identification, can be used to identify a specific pattern and structure of the two-dimensional marker, in such a manner that the two-dimensional marker in the visual data is detected. Subsequent to the two-dimensional maker being detected, the two-dimensional marker can be decoded to obtain information in the two-dimensional marker, which can be encoded data such as numbers and text. It should be noted that, a corresponding decoding method can be selected based on the type of the two-dimensional marker for decoding.

An example of using an edge detection algorithm to detect the position of the two-dimensional marker in the visual data is taken to be described. In this example, the visual data is image data. Subsequent to obtaining the image data, a gradient of each pixel point in the image can be calculated through the edge detection algorithm. For example, a filter (such as a Sobel operator or a Canny operator) can be applied to the image to calculate the gradient of each pixel point in the image. Each pixel is sorted based on a magnitude of the gradient, and the algorithm can cluster pixels with similar directions and magnitudes of the gradient, and an optimal straight line is calculated using the least square method. These straight lines represent edges in the image, and different contours can be identified through the edges in the image. If a certain contour is similar to the contour of the two-dimensional marker, the position of this contour can be determined as the position of the two-dimensional marker in the image.

Subsequent to obtaining decoded information of the two-dimensional marker, the corresponding relationship of the two-dimensional marker can be searched for in the database based on the decoded information, in such a manner that associated target object and key point can be determined based on the corresponding relationship. The position of the two-dimensional marker in the visual data is a position of the key point corresponding to the two-dimensional marker. Further, the target object can be located based on the position of the key point.

In this embodiment, by determining an appropriate two-dimensional marker based on needs of the scene, selection of the two-dimensional marker can change with the scene, in such a manner that the two-dimensional marker has sufficient degree of identification and information capacity in the visual data under different scenes. In addition, by deploying the two-dimensional marker at the key point of the target object and recording the corresponding relationship, necessary reference information is provided for subsequent locating. In this way, a position of the target object can be accurately calculated based on the position of the two-dimensional marker in the visual data, improving accuracy of locating.

In some embodiments, said determining the two-dimensional marker to be used based on the scene includes: determining a size of a blank area in the two-dimensional marker based on the scene; the blank area being an area between an edge of the two-dimensional marker and a background area of the two-dimensional marker; and determining the two-dimensional marker to be used based on the size of the blank area.

In this embodiment, the two-dimensional marker can include the background area and the blank area. As illustrated in FIG. 2, the background area is an area where the code is located. The background area can include a black background and a white binary matrix inside the black background. Different white binary matrices indicate different information contained in the two-dimensional marker. The blank area is the area between the edge of the two-dimensional marker and the edge of the background area. The blank area is a blank zone without any code, and is crucial for identification of the two-dimensional marker because the blank area provides necessary visual buffering to help a scanning device determine a boundary of the two-dimensional marker.

In this embodiment, size of the blank area can be determined based on characteristics of the scene. A larger blank area means a greater distance between the edge of the two-dimensional marker and the edge of the background area. For example, in the environment with strong light or reflection, a larger blank area can help the scanning device better identify the boundary of the two-dimensional marker, and in the close-range identification scene, a smaller blank area is beneficial to improving visibility and an identification rate of the marker. Tests on the simulated driving scenes show that when a distance between an outer edge of the blank area and the edge of the background area is 0.1 cm, robustness is unsatisfactory in different driving scenes. When the distance between the outer edge of the blank area and the edge of the background area increase to 0.5 cm, the identification rate is greatly improved. Therefore, it is found out through the tests that when the distance between the outer edge of the blank area and the edge of the background area is in a range of 0.5 cm to 1 cm, identification accuracy is the highest.

In this embodiment, two-dimensional markers with different blank areas and different scenes can be tested and calibrated in advance to determine blank areas with good locating effects corresponding to respective scenes and establish an association relationship. Subsequent to determining the scene, the size of the blank area corresponding to the scene can be determined based on the association relationship, in such a manner that the two-dimensional marker to be used is determined.

In this embodiment, by determining an appropriate size of the blank area based on the scene, a risk of misidentification can be reduced. This is because the blank area provides additional visual buffering, which helps to distinguish the two-dimensional marker from surrounding environment, and improves identification accuracy of two-dimensional marker.

In some embodiments, said determining the two-dimensional marker to be used based on the scene includes: determining an area ratio of a background area in the two-dimensional marker to the two-dimensional marker based on the scene; and determining the two-dimensional marker to be used based on the area ratio.

In this embodiment, a detailed analysis can be performed on characteristics of a use scene, and considered factors can include lighting conditions, a distance of the target object, background complexity, dynamic changes, etc. The area ratio of the background area in the two-dimensional marker to the marker itself is determined based on characteristics of the scene. The area ratio is crucial for the visibility of the two-dimensional marker and difficulty of identification. For example, in a complex background, the area of the background area can be increased to make it easier to distinguish the two-dimensional marker from the background in the image. Subsequent to determining the area ratio, the two-dimensional marker can be designed, in such a manner that the two-dimensional marker can be accurately identified in different environments. In an exemplary embodiment, during a design process, the size, color, pattern, etc. of the marker can be adjusted to ensure performance of the marker in specific scenes.

In this embodiment, two-dimensional markers with different area ratios and different scenes can be tested and calibrated in advance to determine the area ratios with good locating effects corresponding to respective scenes and establish an association relationship. Subsequent to determining the scene, the area ratio corresponding to the scene can be determined based on the association relationship, in such a manner that the two-dimensional marker to be used is determined. Tests on the simulated driving scene show that when the area ratio of the background area in the two-dimensional marker to the two-dimensional marker is in a range of 0.51 to 0.73, the identification accuracy is the highest.

In this embodiment, by precisely controlling the area ratio of the background area in the two-dimensional marker to the marker itself, the two-dimensional marker in an image neither forms an excessively strong contrast with a background due to being too prominent, nor is difficult to be detected due to being too concealed, facilitating to improving efficiency of an algorithm in processing the image. This is because the algorithm can lock the target marker more quickly, which reduces processing of irrelevant background information. In addition, an appropriate area ratio can also enhance stability of the marker under different lighting and viewing angle conditions, in such a manner that reliable target locating can also be achieved under variable environmental conditions.

In some embodiments of the present disclosure, the target object includes a plurality of key points. Said deploying the two-dimensional marker at the key point of the target object includes: selecting a plurality of non-collinear key points from the target object; deploying the two-dimensional marker at each of the plurality of non-collinear key points, and recording a corresponding relationship among the target object, each of the plurality of non-collinear key points, and the two-dimensional marker; or selecting a plurality of key points from the target object to form a polygon; deploying the two-dimensional marker at each of the plurality of key points that form the polygon, and recording a corresponding relationship among the target object, each of the plurality of key points that form the polygon, and the two-dimensional marker.

In this embodiment, the target object includes the plurality of key points, and position arrangement of these key points on the target object conforms to a predetermined positional relationship. For example, the predetermined positional relationship can be symmetrical, grid-like, or any other geometric layout that facilitates locating.

In this embodiment, the plurality of key points selected are not completely collinear. For example, if three key points are selected, the three key points are not on a straight line, or if four key points are selected, the four key points are not on a straight line.

In this embodiment, the polygon can be determined based on the number of key points. For example, if three key points are provided, the polygon can be a triangle, or if four key points are provided, the polygon can be a quadrilateral. Based on the number of key points, any other type of polygon can be provided, such as a pentagon and a hexagon, which is not limited in the embodiments of the present disclosure.

In this embodiment, by selecting the plurality of non-collinear key points from the target object and deploying two-dimensional marker at each of the plurality of non-collinear key points, an advantage of geometric distribution of non-collinear key points is utilized. Even if some markers fail to be identified due to occlusion or damage, the target object can still be located through other visible markers, reducing an impact of failure of a single marker on overall locating accuracy. By using geometric properties of the polygon, a stable reference framework is provided for locating. In addition, vertices (i.e. the key points) of the polygon are used as deployment positions of the two-dimensional markers. Even if some markers fail to be temporarily identified due to environmental factors (such as occlusion and changes in light), effective locating can still be performed based on other visible markers, improving the accuracy of locating.

In some embodiments of the present disclosure, said locating the target object based on the position of the two-dimensional marker in the visual data and the corresponding relationship includes: performing feature extraction on the visual data; detecting the two-dimensional marker included in the visual data and the position of the two-dimensional marker in the visual data based on an extracted feature; locating the target object in the visual data based on the corresponding relationship and a detection result of the two-dimensional marker and the position of the two-dimensional marker in the visual data; or obtaining, in response to detecting that the number of two-dimensional markers in the visual data is less than the number of deployed two-dimensional markers, a position of an undetected two-dimensional marker by fitting based on a geometric positional relationship of the key point; and locating the target object based on a position of a detected two-dimensional marker in the visual data, the obtained position of the undetected two-dimensional marker, and the corresponding relationship.

In this embodiment, the computer vision algorithm can be used to identify features in the image. For example, a scale-invariant feature transformation algorithm can be adopted. This algorithm extracts features by finding local feature points in an image and calculating descriptors. These feature points are usually corner points, edge points, or other significant image features. The algorithm describes the image blocks around these feature points to generate a feature vector, which can be used to match the same feature points in different images.

Subsequent to extracting the features, specific patterns and structures can be found through algorithms, such as performing feature matching or pattern identification on the feature points, to identify the contour of the two-dimensional marker. For example, an edge in the image can be identified through the edge detection algorithm, to detect the contour of the two-dimensional marker, in such a manner that the position of the two-dimensional marker in the visual data is determined.

Subsequent to detecting the position of the two-dimensional marker, the two-dimensional marker can be decoded to obtain the encoded data in the two-dimensional marker. The encoded data can include information such as numbers and texts. The target object in the visual data is then located in combination with the corresponding relationship.

In this embodiment, if it is detected that the number of two-dimensional markers in the visual data is less than the number of deployed two-dimensional markers, it can be due to occlusion of some two-dimensional markers or unsatisfactory shooting conditions. In such cases, the position of the undetected two-dimensional marker in the visual data can be obtained by fitting and by combining the position of the detected two-dimensional marker in the visual data and the geometric positional relationship of the key point. It should be noted that, since the two-dimensional markers are deployed at the key points, the geometric positional relationship of the key points is a geometric positional relationship of the deployed two-dimensional markers.

In an exemplary embodiment, the position of the undetected two-dimensional marker can be obtained by fitting in any method. For example, since the arrangement of the two-dimensional marker on the target object conforms to the geometric positional relationship of the key points, when the positions of some two-dimensional markers are known, possible positions of the undetected two-dimensional markers can be obtained by linear fitting, polynomial fitting, geometric fitting, etc. The geometric positional relationship of the key points can be learned by a machine learning algorithm, and the position of the undetected two-dimensional marker is predicted based on the position of the detected two-dimensional marker.

For example, if the two-dimensional marker is deployed on each of three key points of the target object (three two-dimensional markers are deployed), and the geometric positional relationship of the key points is a triangle, when any two among the three two-dimensional markers are detected, the position of the undetected two-dimensional marker can be obtained by fitting based on the geometric relationship of the triangle. If the two-dimensional marker is deployed on each of four key points of the target object (four two-dimensional markers are deployed), and the geometric positional relationship of the key points is a quadrilateral, when any three among the four two-dimensional markers are detected, the position of the undetected two-dimensional marker can be obtained by fitting based on the geometric relationship of the quadrilateral. Similarly, when other number of two-dimensional markers is provided and other geometric positional relationship of the key points is provided, the position of the undetected two-dimensional marker can be obtained by fitting based on the position of the detected two-dimensional markers in the visual data and the geometric positional relationship of the key points.

Subsequent to obtaining the position of the undetected two-dimensional marker by fitting, the position of the target object in the visual data can be determined by combining the position of the two-dimensional marker in the visual data and the corresponding relationship among the target object, the key point, and the two-dimensional marker.

In this embodiment, by performing the feature extraction on the visual data, the two-dimensional marker in the visual data can be identified and the position of the two-dimensional marker in the visual data can be detected. The target object can be accurately located in combination with the corresponding relationship. When the number of detected two-dimensional markers in the visual data is less than the number of deployed two-dimensional markers, position information of the detected two-dimensional markers and the geometric positional relationship of the key points can be used to predict the possible position of the undetected two-dimensional marker through fitting. In this way, a two-dimensional marker layout can be reconstructed even when the two-dimensional marker is missing, which achieves effective locating of the target object, improving the accuracy of locating.

In some embodiments of the present disclosure, the target screen includes a field of view partition and a target object partition. The field of view partition is configured to display the visual data and a position of the eye movement data in the visual data. The target object partition is configured to display the target object and a position of the target eye movement data on the target object.

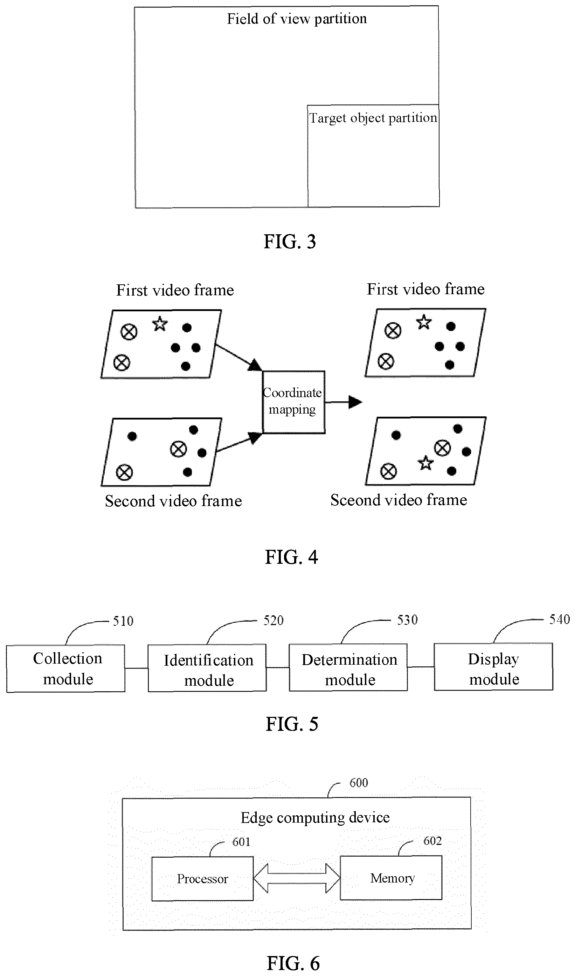

In some embodiments, as illustrated in FIG. 3, the target screen can include the field of view partition and the target object partition. In the field of view partition, the visual data of the user and the position of the eye movement data in the visual data can be displayed. In the target object partition, the target object and the position of the target eye movement data on the target object can be displayed.

In this embodiment, by dividing the target screen into the field of view partition and the target object partition, the field of view partition enables intuitive display of a relative position of the user's eye movement data within an entire field of view of the user, which is conducive to analyzing user's visual focus distribution and visual path. In addition, the target object partition further focuses on a specific target gazed on by the user. By displaying a specific position of the target eye movement data on the target object, user's attention distribution and attention details on the target object can be more accurately understood, which not only enhances visual analysis of the user's gaze behavior, but also can provide guidance for designing user interfaces, optimizing advertising layouts, improving user experience, etc.

During implementation the embodiments of the present disclosure, the inventors found that in a multi-screen system, when a device with image/video collection function (such as a camera or a device with a camera, which can be referred to as a visual signal collection device) performs image/video collection, a shooting angle of the visual signal collection device relative to the target object can not be aligned. For example, a deployment position of the visual signal collection device is not located directly in front of the target object for shooting, or the shooting angle of the visual signal collection device shifts or changes during the image/video collection process, which causes the image of the target object, which should originally be in a standard shape, to appear distorted in the image/video captured by the visual signal collection device. Distortion of the image makes it difficult to accurately obtain operation information received on the target object, such as the user's gaze point, touch point, and mouse click position on the target object. Therefore, the eye movement data related to the operation information in a distorted sub-image of the target object in the visual data collected by the visual signal collection device can be mapped to a non-distorted standard/normal shape target screen, and the eye movement data on the target object in the collected image or video can be correspondingly presented on the target screen through mapping of points, accurately obtaining the operation information received on the target object.

In some embodiments, said sending the target eye movement data to the target screen to correspondingly present the target eye movement data on the target object displayed on the target screen includes: obtaining position information of the target eye movement data on the target object; performing identification on the visual data to obtain position information of each marker pre-marked on the target object; determining a transformation relationship based on the position information of each marker; and substituting the position information of the target eye movement data on the target object into the transformation relationship to obtain target coordinates of the target eye movement data on the target object in the target screen.

In this embodiment, with reference to the description of operation at block 130, the specific position of the eye movement data in the visual data can be deduced. If the eye movement data falls on the target object, the position information of the eye movement data on the target object can be further determined based on the specific position of the eye movement data in the visual data. That is, the position information of the target eye movement data on the target object is determined.

In this embodiment, the marker can be the above-described two-dimensional marker. The two-dimensional marker can be deployed at the key points of the target object. The position information of each marker on the target object can be obtained by identifying the visual data.

For example, the target object is a screen, the markers are deployed at four corners of the screen, and the four markers can form an effective quadrilateral. The position information of the markers is coordinates of the four markers. A distance between each coordinate point and an origin of a coordinate system can be calculated, and a point with the smallest distance to the origin of the coordinate system is taken as a starting point. Vectors from the starting point to the other three points are calculated, and an angle between each vector and an abscissa axis of the coordinate system is determined. These three points are expressed as $(x_1, y_1)$, $(x_2, y_2)$, and $(x_3, y_3)$ in descending order of their corresponding angles, and the starting point is expressed as $(x_4, y_4)$. A transformation relationship can be determined based on the obtained coordinates of the four points, and is used to map the target eye movement data on a distorted rectangle corresponding to the target object to the target screen.

In an exemplary embodiment, the position information of the target eye movement data can be expressed as (x, y), and the target coordinates can be expressed as (x', y'). The transformation relationship is an expression including the position information of the target eye movement data. By substituting the position information of the target eye movement data into the expression, the target coordinates are obtained, realizing real-time mapping of the target eye movement data.

In this embodiment, by performing identification on the visual data, position information of each identified marker helps to locate a specific position of the target object and an identification area including the target eye movement data. Obtaining the position information of the target eye movement data is helpful to accurately map the target eye movement data to the target screen. A mapping relationship between the target object and the target screen can be established through the position information of the marker, facilitating to accurately aligning the target object and the target screen in a mapping process, and allowing different marker layouts to adapt to different screen sizes and shapes. Subsequent to determining the transformation relationship, the position information of the target eye movement data can be mapped to the target screen in real time, which supports interaction with the target object. Also, corresponding response can be seen on the target screen, improving real-time performance of target point mapping.

In some embodiments of the present disclosure, said determining the transformation relationship based on the position information of each marker includes: determining a first parameter set for calculating an abscissa of the target coordinates, a second parameter set for calculating an ordinate of the target coordinates, and a third parameter set for calculating a homogeneous coordinate normalization factor based on the position information of each marker; determining an expression of a first intermediate variable based on the third parameter set; obtaining a first expression for calculating the abscissa of the target coordinates based on the expression of the first intermediate variable and the first parameter set; and obtaining a second expression for calculating the ordinate of the target coordinates based on the expression of the first intermediate variable and the second parameter set, the first expression and the second expression constituting the transformation relationship.

In this embodiment, the second intermediate variable can be calculated based on $(x_2, y_2)$, $(x_3, y_3)$, and $(x_4, y_4)$, and the second intermediate variable can be expressed as $num_2$. The third intermediate variable can be calculated based on $num_2$, $(x_1, y_1)$, $(x_2, y_2)$, and $(x_4, y_4)$, and the third intermediate variable can be expressed as g. The fourth intermediate variable can be calculated based on $num_2$, $(x_1, y_1)$, $(x_3, y_3)$, and $(x_4, y_4)$, and the fourth intermediate variable can be expressed as h.

Further, based on the second intermediate variable $num_2$, the third intermediate variable g, and the fourth intermediate variable h, the first parameter set, the second parameter set, and the third parameter set can be calculated.

In some embodiments, an expression of the first intermediate variable is:

$$num_1 = Gx + Hy + 1 \text{ ,}$$

where, G and H represent parameters in the third parameter set, and (x, y) represents position information of the target point.

The first expression is:

$$x' = \frac{Ax + By}{num_1} + C \text{ ,}$$

where, x' represents the abscissa of the target coordinates, A, B, and C represent parameters in the first parameter set, $num_1$ represents the first intermediate variable, and (x, y) represents the position information of target eye movement data.

The second expression is:

$$y' = \frac{Dx + Ey}{num_1} + F \text{ ,}$$

where, y' represents the ordinate of the target coordinates, D, E, and F represent parameters in the second parameter set, $num_1$ represents the first intermediate variable, and (x, y) represents the position information of the target eye movement data.

In this embodiment, the mapping relationship between the target object and the target screen can be more accurately described by determining parameter sets for the abscissa, the ordinate, and the homogeneous coordinate normalization factor, respectively. Introduction of an intermediate variable can simplify final transformation relationship expression, making a calculation process more efficient. Through combination of an expression of the abscissa and an expression of the ordinate, a complete transformation relationship is formed, which ensures position consistency of the target eye movement data between the target object and the target screen. Subsequent to determining the transformation relationship, it can be reused multiple times, improving real-time performance and reusability of the system.

In some embodiments of the present disclosure, four markers pre-marked on the target object are provided. Corresponding position information of the four markers is first coordinates, second coordinates, third coordinates, and fourth coordinates, respectively. Said determining the first parameter set for calculating the abscissa of the target coordinates, the second parameter set for calculating the ordinate of the target coordinates, and the third parameter set for calculating the homogeneous coordinate normalization factor based on the position information of each marker includes: calculating a second intermediate variable based on the second coordinates, the third coordinates, and the fourth coordinates; calculating a third intermediate variable based on the second intermediate variable, the first coordinates, the second coordinates, and the fourth coordinates; calculating a fourth intermediate variable based on the second intermediate variable, the first coordinates, the third coordinates, and the fourth coordinates; determining the first parameter set and the second parameter set based on the first coordinates, the second coordinates, the third coordinates, the third intermediate variable, and the fourth intermediate variable; and calculating the third parameter set based on the third intermediate variable and the fourth intermediate variable.

In this embodiment, the first coordinates are expressed as $(x_1, y_1)$, the second coordinates are expressed as $(x_2, y_2)$, the third coordinates are expressed as $(x_3, y_3)$, and the fourth coordinates are expressed as $(x_4, y_4)$. The second intermediate variable can be calculated based on $(x_2, y_2)$, $(x_3, y_3)$, and $(x_4, y_4)$, and an expression of the second intermediate variable is:

$$\text{num}_2 = (x_4 - x_3)(y_4 - y_2) - (x_4 - x_2)(y_4 - y_3)$$

Further, based on the second intermediate variable $\text{num}_2$, the third intermediate variable g and the fourth intermediate variable h can be calculated. An expression of the third intermediate variable g is:

$$g = \frac{(x_4 - x_1)(y_4 - y_2) - (x_4 - x_2)(y_4 - y_1)}{\text{num}_2};$$

and an expression of the fourth intermediate variable is:

$$h = \frac{(x_4 - x_3)(y_4 - y_1) - (x_4 - x_1)(y_4 - y_3)}{\text{num}_2}$$

The third parameter set includes a parameter G and a parameter H, G = g - 1, and H = h - 1 .

In this embodiment, a stable framework can be formed through four markers, which reduces mapping errors caused by differences in a shape, a size, resolution, and other factors of the target object, adapting to different types of configurations, having good versatility, and being easy to implement the calculation process based on clear mathematical expressions and intermediate variables.

In some embodiments, said determining the first parameter set and the second parameter set based on the first coordinates, the second coordinates, the third coordinates, the third intermediate variable, and the fourth intermediate variable includes: taking a product of a difference between an abscissa of the third coordinates and an abscissa of the first coordinates and the third intermediate variable as a first parameter, taking a product of a difference between an abscissa of the second coordinates and the abscissa of the first coordinates and the fourth intermediate variable as a second parameter, and taking the abscissa of the first coordinates as a third parameter, the first parameter, the second parameter, and the third parameter constituting the first parameter set; and taking a product of a difference between an ordinate of the third coordinates and an ordinate of the first coordinates and the third intermediate variable as a fourth parameter, taking a product of a difference between an ordinate of the second coordinates and the ordinate of the first coordinates and the fourth intermediate variable as a fifth parameter, and taking the ordinate of the first coordinates as a sixth parameter, the fourth parameter, the fifth parameter, and the sixth parameter constituting the second parameter set.

The first parameter set includes parameters A, B, and C, the second parameter set includes parameters D, E, and F, and the third parameter set includes parameters G and H. A = $g(x_3 - x_1)$, B = $h(x_2 - x_1)$, C = $x_1$, D = $g(y_3 - y_1)$, E = $h(y_2 - y_1)$, and F = $y_1$. Where, C and F represent a translation offset of the target point, G and H are used to calculate the normalization factor of the homogeneous coordinates. The normalization factor is used to maintain correctness of perspective transformation.

In this embodiment, an accurate mapping result can be provided by using the position information of four markers and performing specific mathematical operations such as product and difference to calculate parameters. Difference operation helps capture the relative positional relationship between different markers. The stability of the system can be improved using a plurality of markers as reference points and calculating parameter sets based on these reference points. Even if there is an error in the position detection of one of the plurality of markers, it can be corrected by the information of other markers, reducing an impact of the error on the mapping result.

In some embodiments, said performing identification on the visual data to obtain the position information of each marker pre-marked on the target object includes: identifying a marker area of each marker pre-marked on the target object from the visual data; and determining center point coordinates of each marker area in a coordinate system established based on the visual data to obtain the position information of each marker. Said determining the center point coordinates of each marker area includes: for each marker area in the visual data, determining coordinates of each point in a contour of the marker area, and calculating average coordinates of all points in the contour of the marker area to obtain the center point coordinates of the marker area.

In this embodiment, a lower right corner of the visual data can be set as a coordinate origin, with a rightward direction as a positive direction of the x-axis and an upward direction as a positive direction of the y-axis. Image processing techniques, such as edge detection, threshold segmentation, and template matching, are used to identify the contour of the marker area of each marker pre-marked on the target object from the visual data.

In this embodiment, for any marker area in the visual data, the contour of the marker area is expressed as coordinates of a series of points. Each point in the contour is traversed to determine the number of points in the contour. An average abscissa and an average ordinate of respective points are calculated. The average abscissa is a ratio of a sum of the abscissas of respective points to the number of points, and the average ordinate is a ratio of a sum of the ordinates of respective points to the number of points. The center point coordinate of each marker area can be obtained by the above-described operations.

In this embodiment, by using the coordinate system established based on the image, the marker can be accurately located, which ensures accuracy of the position information. Identifying the marker area of the marker and determining the center point coordinates can accurately reflect an actual position of the marker in the image. Calculating the average coordinates of all points on the contour as the center point coordinates takes into account an overall shape and size of the marker area, which can more accurately reflect the actual position of the marker. Compared with a method that only considers some points or specific points on the contour, an average coordinate method can better the reduce error and improve the accuracy of position information.

In some embodiments, said sending the target eye movement data to the target screen to correspondingly present the target eye movement data on the target object displayed on the target screen includes: obtaining a first image block including the target eye movement data in a first video frame of the visual data; calculating, in response to the first image block satisfying a predetermined condition, a coordinate mapping relationship between the first video frame and a second video frame in the target screen based on the first image block; and mapping the target eye movement data to the second video frame based on the coordinate mapping relationship.

In this embodiment, the first image block is a local area of the first video frame, and the target eye movement data is included in the local area.

In this embodiment, an image that the user is watching or interacting with is like content on a computer screen, a book page, or a field of view in the real world. Through coordinate mapping, the target eye movement data can be mapped to the video frame of the target screen, realizing in-depth analysis and understanding of the user's visual behavior.

When the first image block satisfies the predetermined condition, for example, quality of the first image block and information included in the first image block satisfy predetermined conditions, the coordinate mapping relationship between the first video frame and the second video frame can be calculated by the image processing and computer vision algorithm.

In this embodiment, it can be seen from the foregoing that the position of the target eye movement data in the visual data can be inferred, in such a manner that the position of the target eye movement data in the first video frame of the visual data can be obtained. Subsequent to obtaining the coordinate mapping relationship, calculation can be performed based on the coordinate mapping relationship and the position of the target eye movement data in the first video frame, to obtain the position of the target eye movement data in the second video frame of the target screen.

In this embodiment, by obtaining the image block including the target eye movement data and by calculating, in response to the image block satisfying the predetermined condition, the coordinate mapping relationship between the first video frame and the second image frame, the calculation process focuses more on an area related to the target eye movement data in the image instead of an entire first video frame, reducing influence of environmental changes on the calculation process, and improving calculation accuracy of coordinate mapping relationship. Therefore, accuracy of eye movement tracking is improved.

In some embodiments, said obtaining the first image block including the target eye movement data in the first video frame of the visual data includes: determining a position of the target eye movement data in the first video frame; and

determining an area within a first predetermined range centered on the position of the target eye movement data in the first video frame as the first image block.

In this embodiment, subsequent to determining the position of the target eye movement data in the first video frame, the first image block can be determined based on the position of the target eye movement data. For example, the first image block is an area within a predetermined range including the position of the target eye movement data in the first video frame, and the first image block can be a circular area, a square area, etc.

In some embodiments, the area within the first predetermined range centered on the position of the target eye movement data in the first video frame can be determined as the first image block. The first predetermined range can be a circular area, a square area, etc. The first predetermined range is smaller than the first video frame. For example, if the resolution of the first video frame is W*H, the first predetermined range can be an area centered on the target eye movement data with a size of 0.1 W and 0.1 H.

In this embodiment, by accurately identifying the position of the target eye movement data and by determining the first image block based on the position of the target eye movement data, processing of irrelevant areas in an image can be reduced, in such a manner that the calculation process can focus on areas near the target eye movement data, reducing invalid calculation in irrelevant areas and improving calculation efficiency and accuracy.

In some embodiments, the predetermined condition includes: the number of matching points in an image block being greater than or equal to a predetermined number, and/or a plurality of matching points in the image block being not collinear.

In this embodiment, by setting the predetermined condition that requires the number of matching points to be greater than or equal to the predetermined number and the plurality of matching points to be not collinear, there are sufficient matching points to calculate the coordinate mapping relationship. The condition that the plurality of matching points are not collinear enables the matching points to provide sufficient geometric information to solve the coordinate mapping relationship between the first video frame and the second video frame, further improving accuracy of target eye movement data mapping.

In some embodiments, the method further includes: obtaining, in response to the first image block not satisfying the predetermined condition, a second image block including the target eye movement data in the first video frame. The method further includes: calculating, in response to the second image block satisfying the predetermined condition, the coordinate mapping relationship between the first video frame and the second video frame in the target screen based on the second image block.

In this embodiment, if the first image block does not satisfy the predetermined condition, a second image block can be re-determined. The second image block also includes the target eye movement data, and the second image block and the first image block are different local areas in the first video frame. The second image block and the first image block can be image blocks having the same shape or image blocks having different shapes. The second image block can be an image block obtained by translating the first image block, or an image block obtained by enlarging the first image block.

In this embodiment, if the second image block satisfies the predetermined condition, the coordinate mapping relationship between the first video frame and the second video frame can be calculated based on the second image block.

In this embodiment, by obtaining, in response to the first image block not satisfying the predetermined condition, the second image block including the target eye movement data in the first video frame, even if a sufficient number of matching points or matching points with appropriate distribution cannot be found within a range of the first image block, the possibility of finding effective matching points can be increased by adjusting a search area, enhancing flexibility and a success rate of a target eye movement data mapping process.

In some embodiments, said obtaining the second image block including the target eye movement data in the first video frame includes: obtaining the second image block based on a position of the first image block in the first video frame.

In this embodiment, the second image block can be the image block obtained by translating the first image block or the image block obtained by enlarging the first image block. The second image block can be determined by the position of the first image block.

In this embodiment, by obtaining the second image block based on the position of the first image block in the first video frame, a new search range can be re-determined with the first image block as a reference, improving efficiency of a target eye movement data mapping calculation process.

In some embodiments, said obtaining the second image block including the target eye movement data in the first video frame includes: determining a position of the target eye movement data in the first video frame; determining the area within a second predetermined range centered on the position of the target eye movement data in the first video frame as the second image block; the second predetermined range being larger than a first predetermined range.

In this embodiment, the first predetermined range can be expanded to the second predetermined range, to obtain the second image block, in such a manner that the search range is expanded for finding sufficient matching points. In this way, the accuracy of calculating the coordinate mapping relationship is improved. For example, the first predetermined range can be expanded to 1.1 times, 1.2 times, 1.5 times, 2 times, or other multiples of its original size, to obtain the second predetermined range.

In this embodiment, by expanding the first image block to the second image block, even if a sufficient number of matching points or matching points with appropriate distribution cannot be found within an initial search range, the possibility of finding effective matching points can be increased by expanding the search area, enhancing the flexibility and the success rate of the target eye movement data mapping process.

In some embodiments, the method further includes, prior to obtaining the first image block including the target eye movement data in the first video frame of the visual data: performing feature point matching on the first video frame and the second video frame in the target screen, and reselecting, in response to a matching failure between the first video frame and the second video frame, a video frame from the visual data to replace the first video frame and performing the feature point matching on the reselected video frame and the second video frame.

In this embodiment, feature points are some unique and identifiable points in the image, such as a bright spot, a spot, a corner point, or other prominent visual features. These feature points are equivalent to visual landmarks in the image and are parts of the image that are easy to be identified and distinguished. Matching points refer to the same or similar feature points between two or more images. In tasks such as image registration, stereo vision, image stitching, or object identification, the matching points are used to establish a corresponding relationship between different images. It should be noted that, the feature point and the matching point can be a pixel point or an area including a plurality of pixel points.

Feature point matching is a process of extracting feature points from two or more images and identifying whether these feature points are matching points. In an exemplary embodiment, feature points in the first video frame and the second video frame can be extracted, respectively, and descriptors can be generated for the feature points by feature extraction algorithms, such as scale-invariant feature transform and speeded up robust features. The descriptor can be quantitative representation of a neighborhood around the feature point, which is used to describe characteristics of the feature point, in such a manner the feature point can be identified and matched in different images. Points matching the feature points in the first video frame are found in the second video frame. For example, the descriptors of the feature points in the first video frame and the second video frame can be compared, similarity of the feature points can be evaluated by distance metrics such as Euclidean distance and Hamming distance, and feature points whose similarity are greater than a predetermined threshold are determined as matching points.

In this embodiment, by obtaining the matching points through feature point matching, a spatial relationship between the first video frame and the second video frame can be established, which provides an accurate reference benchmark for subsequent image block, and allows the target eye movement data to be effectively located and mapped to a corresponding position of the second video frame. In addition, determination of the matching points also helps to optimize allocation of computing resources, because these matching points can be focused on without redundant processing of the entire image, improving the efficiency and accuracy of eye movement tracking.

When the matching between the first video frame and the second video frame fails, it means that the similarity between the feature points in the first video frame and the feature points in the second video frame does not reach the predetermined threshold. Therefore, another video frame in the visual data can be selected to replace the first video frame as a new first video frame for performing matching with the second video frame.

In this embodiment, when it fails to successfully establish an accurate corresponding relationship between the first video frame and the second video frame by the feature point matching, a new video frame can be flexibly selected as the first video frame from a continuous video stream, reducing a risk of interruption of an entire eye tracking process due to a single matching failure, and improving continuity of the system.

In some embodiments, said reselecting the video frame from the visual data to replace the first video frame and performing the feature point matching on the reselected video frame and the second video frame includes: determining a video frame adjacent to the first video frame in the visual data or another video frame in the visual data as the reselected video frame.

In this embodiment, the video frame adjacent to the first video frame in the visual data or another video frame in the visual data can be determined as the reselected video frame to serve as a new first video frame to continue matching the second video frame.

In this embodiment, when the feature point matching between the first video frame and the second video frame fails, the video frame adjacent to the current first video frame is selected from the target video stream as a substitute, for re-performing feature point matching, allowing the reselected video frame to maintain temporal continuity. Alternatively, other video frames are selected as the substitute, improving stability and accuracy of the eye tracking process.

In some embodiments, said performing the feature point matching on the first video frame and the second video frame in the target screen includes: inputting the first video frame and the second video frame into a predetermined neural network model, such that the neural network model extracts feature points of the first video frame and the second video frame and performs matching based on extracted feature points.

In this embodiment, a neural network model can be pre-trained, in such a manner that the neural network model can identify and process feature points in the image. For example, a neural network in the neural model can analyze the input first video frame and the input second video frame through its multi-layer structure, extract key visual features, including texture, color, shape, edge, etc., calculate the similarity of the feature points, and output final matching points.

In this embodiment, by performing the feature point matching on the first video frame and the second video frame using the predetermined neural network model, powerful feature extraction capability of deep learning can be utilized to improve accuracy and efficiency of matching.

In some embodiments, said performing the feature point matching on the first video frame and the second video frame in the target screen includes: preprocessing the first video frame and the second video frame, the preprocessing including removing feature points within a predetermined range of a boundary of the first video frame and removing feature points within a predetermined range of a boundary of the second video frame; and performing feature point matching on a pre-processed first video frame and a pre-processed second video frame; and/or inputting the pre-processed first video frame and the pre-processed second video frame into a predetermined neural network model, such that the neural network model extracts feature points of the preprocessed first video frame and the preprocessed second video frame and performs matching based on extracted feature points.

In some embodiments, the pre-processed first video frame and the pre-processed second video frame can be input into the predetermined neural network model, such that the neural network model extracts feature points of the preprocessed first video frame and the preprocessed second video frame and performs the matching based on extracted feature points.

In this embodiment, by removing the feature points within a predetermined range of an image boundary, a negative impact on the accuracy of matching due to noise or incompleteness in an image boundary region can be reduced, which allows greater focus on the more stable and information-rich regions in the image, improving the accuracy of matching.

In some embodiments, the method further includes: storing the feature point of the second video frame extracted by the neural network model. Said reselecting the video frame from the visual data to replace the first video frame and performing feature point matching on the reselected video frame and the second video frame includes: inputting a first video frame after replacing into a predetermined neural network model, such that the neural network model extracts a feature point of the first video frame and performs matching based on the feature point of the first video frame and the stored feature point of the second video frame.

In this embodiment, since the matching failure can occur between the first video frame and the second video frame, if the feature points of the second video frame are extracted every time a new video frame is reselected as the first video frame for matching the second video frame after a matching failure, computing resources are wasted. Therefore, the feature points of the second video frame can be stored, in such a manner that after the matching failure, the feature points of the new first video frame are extracted, and the stored feature points of the second video frame are reused, without the need to repeatedly extract the feature points of the second video frame.

In this embodiment, features of the second video frame are extracted through the neural network model and are stored. When other video frame images are matched with the second video frame, the feature point of the second video frame can be called for performing feature matching. Therefore, there is no need to repeatedly extract the features of the second video frame, improving processing efficiency.

In some embodiments, said calculating the coordinate mapping relationship between the first video frame and the second video frame in the target screen based on the first image block includes: obtaining first position coordinates of a matching point in the first image block in the first video frame and second position coordinates of the matching point in the second video frame; and calculating a homography matrix corresponding to the matching point based on the first position coordinates and the second position coordinates, the homography matrix representing the coordinate mapping relationship.

The homography matrix describes a projection relationship between different planes. This projection relationship can be used to map points on one plane to corresponding points on another plane, and is usually used in scenarios such as image matching, stereo vision, and image stitching. In this embodiment, the coordinate mapping relationship can be represented by the homography matrix, which is used to transform points in the first video frame into the coordinate system of the second video frame, to enable the two images to be aligned. For example, $P_1$ represents a point in the first video frame, $P_2$ represents a point in the second video frame. Therefore, a coordinate mapping relationship between $P_1$ and $P_2$ can be expressed as: $P_2 = M \cdot P_1$, where $M$ represents the homography matrix.

In this embodiment, the first position coordinates of the matching point in the first image block in the first video frame and the second position coordinates of the matching point in the second video frame can be obtained. For example, there are four matching points in the first image block, namely matching point 1, matching point 2, matching point 3, and matching point 4, respectively. Coordinates of the matching point 1 in the first video frame are $\left(x_1^1, y_1^1\right)$, and coordinates of the matching point 1 in the second video frame are $\left(x_1^2, y_1^2\right)$. Coordinates of the matching point 2 in the first video frame are $\left(x_2^1, y_2^1\right)$, and coordinates of the matching point 2 in the second video frame are $\left(x_2^2, y_2^2\right)$. Coordinates of the matching point 3 in the first video frame are $\left(x_3^1, y_3^1\right)$, and coordinates of the matching point 3 in the second video frame are $\left(x_3^2, y_3^2\right)$.

Coordinates of the matching point 4 in the first video frame are $\left(x_4^1, y_4^1\right)$, and coordinates of the matching point 4 in the second video frame are $\left(x_4^2, y_4^2\right)$. A system of linear equations are constructed using the position coordinates of these matching points in different images, to facilitate calculation and obtaining of the homography matrix $M$ :

$$x_n^2 \cdot m_{11} + y_n^2 \cdot m_{12} + m_{13} = m_{31} \cdot x_n^1 + m_{32} \cdot y_n^1 + m_{33} ,$$

$$x_n^2 \cdot m_{21} + y_n^2 \cdot m_{22} + m_{23} = m_{41} \cdot x_n^1 + m_{42} \cdot y_n^1 + m_{43} ,$$

where, $(m_{11}, m_{12}, \cdots m_{43})$ represent elements of the homography matrix $M$, and $n$ = 1,2,3,4.

Values of elements $M$ of the homography matrix $M$ are obtained by solving the above-described equations using the least square method or other numerical methods, such as direct linear transformation. It can be seen that, if the number of matching points is greater than four and these matching points are not collinear, a unique solution for the homography matrix $H$ can be obtained. Therefore, the predetermined condition can be determined based on the number of matching points and/or the distribution of matching points. For example, the predetermined condition can be set to be that the number of matching points is greater than or equal to 4 and these matching points are not collinear. Of course, the above-described calculation process takes the number of matching points being four as an example. When the number of matching points is another value, the above-described calculation process can be adaptively modified based on the number of matching points.

As illustrated in FIG. 4, a pentagram in the second video frame represents the position at which the target eye movement data is located. Subsequent to calculating the coordinate mapping relationship, the position of the target eye movement data in the second video frame can be obtained by calculating the position at which the target eye movement data is located and the coordinate mapping relationship.

In this embodiment, by calculating corresponding position coordinates of matching points in the first video frame and the second video frame, a mathematical model can be established to describe a spatial relationship between these matching points, and the homography matrix can be determined based on this for representing the coordinate mapping relationship. Using the homography matrix to represent the coordinate mapping relationship can adapt to complex image transformation situations, improving accuracy and robustness of the target eye movement data mapping.

In some embodiments, the method further includes: obtaining target eye movement data of a plurality of users associated with gazes on a same target object; and analyzing a multi-user gaze behavior based on the target eye movement data corresponding to the plurality of users.

In this embodiment, the target eye movement data of the plurality of users associated with gazes on the same target object can be obtained, and the multi-user gaze behavior is analyzed based on the target eye movement data. For example, based on the target eye movement data, a concentrated position of each user's gaze on the target object can be analyzed, and a position at which each user gazes at the target object for the longest time can be analyzed, etc. analyzing a position that most users are more interested in.

In this embodiment, by analyzing the multi-user gaze behavior based on the target eye movement data corresponding to the plurality of users, an ability to analyze behavior of a group of users is improved.

In some embodiments, the target eye movement data of a single user can be analyzed to analyze the user's gaze behavior. For example, the position on the target object where the user gazes for the longest time, a position where the user gazes with the highest frequently, etc. can be analyzed based on the user's target eye movement data, analyzing the position on the target object that is most attractive to the user.

In some embodiments, said analyzing the multi-user gaze behavior based on the target eye movement data corresponding to the plurality of users includes: sending the target eye movement data corresponding to the plurality of users to the target screen, to superimpose and present the target eye movement data corresponding to the plurality of users at the target object displayed on the target screen.

In this embodiment, the target eye movement data of a plurality of different users can be overlaid and displayed on the target screen. For example, the visual data of the plurality of different users and the positions of the eye movement data of the different users in the visual data can be displayed in the field of view partition. The target object can be displayed in the target object partition, and the positions of the target eye movement data corresponding to the plurality of users on the target object can be overlaid and displayed on the target object.

In this embodiment, by superimposing and displaying the target eye movement data corresponding to the plurality of users on the target screen, researchers and designers can intuitively observe and compare common gaze points and gaze patterns of different users when gazing at the same target object, identifying a general interest region or hotspot of a group of users.

In some embodiments, said analyzing the multi-user gaze behavior based on the target eye movement data corresponding to the plurality of users includes: analyzing an eye movement trajectory and/or an eye movement point heat map of the plurality of users based on the target eye movement data corresponding to the plurality of users, to obtain a primary viewing position of the plurality of users and a habitual operation process of the plurality of users when performing a predetermined operation; and optimizing a scene based on the primary viewing position of the plurality of users and the habitual operation process of the plurality of users when performing the predetermined operation.

In this embodiment, the eye movement trajectory of the user can be analyzed by the target eye movement data, to identify the user's viewing mode and order, and find out the primary viewing position of different users. By collecting data such as eye movement points and gaze duration of different users, the eye movement point heat map is generated, and the concentrated area of user gaze is displayed through color changes. For example, warm colors such as red and yellow can be used to represent areas with dense gaze or long duration of gaze.

The habitual operation process of the users when performing the predetermined operation is analyzed through the eye movement trajectory and the heat map, and the design is optimized based on the primary viewing position of the users and the habitual operation process of the users. For example, in user interface design, important information or controls can be placed in the primary viewing position of the users, to simplify the users' operation process and improve the user experience.

In this embodiment, by analyzing the eye movement trajectory and the eye movement point heat map of the plurality of users, the primary viewing position and the habitual operation process of the plurality of users can be revealed, realizing an in-depth understanding of user's behavior patterns. This embodiment provides a quantitative means to evaluate and optimize interactive experience between the user and the product or service. By identifying the common gaze point and the gaze pattern, designers can optimize an interface layout, in such a manner that key information and functions conform to user's natural line-of-sight flow and operational habits, improving user satisfaction and operation efficiency.

The execution subject of the human-factors intelligence user gaze analysis method according to the embodiments of the present disclosure can be a human-factors intelligence user gaze analysis apparatus. In the embodiments of the present disclosure, the human-factors intelligence user gaze analysis apparatus executing the human-factors intelligence user gaze analysis method is taken as an example to describe the human-factors intelligence user gaze analysis apparatus according to the embodiments of the present disclosure.

The embodiments of the present disclosure further provide a human-factors intelligence user gaze analysis apparatus.

As illustrated in FIG. 5, the human-factors intelligence user gaze analysis apparatus includes: a collection module 510 configured to collect visual data of a user's field of view through a camera of a head-mounted device, and collect eye movement data of the user within the field of view through an eye tracker of the head-mounted device; an identification module 520 configured to identify a target object in the visual data; a determination module 530 configured to determine target eye movement data associated with gaze on the target object in the eye movement data; and a display module 540 configured to send the target eye movement data to a target screen to correspondingly present the target eye movement data on the target object displayed on the target screen.

With the human-factors intelligence user gaze analysis apparatus according to the present disclosure, the visual data of the user's field of view is collected through the camera of the head-mounted device, and the eye movement data of the user within the field of view is collected through the eye tracker of the head-mounted device; the target object in the visual data is identified; the target eye movement data associated with gaze on the target object in the eye movement data is determined; and the target eye movement data is sent to the target screen to correspondingly present the target eye movement data on the target object displayed on the target screen. The embodiment of the present disclosure realizes effective identification of the target object gazed at by the user by collecting the visual data and the eye movement data, and displays the target eye movement data of the user on the target object on the target screen. The present disclosure can display the target eye movement data of the user on the target object on the target screen in real time without manually annotating target gaze data of the user on the target object, to perform real-time analysis of user's visual behavior on the target screen, enhancing the user interaction experience and improving efficiency of user visual behavior analysis.

The human-factors intelligence user gaze analysis apparatus according to the embodiments of the present disclosure can be an edge computing device, or can be a component in the edge computing device, such as an integrated circuit or a chip. The edge computing device can be a terminal or other device other than the terminal. For example, the edge computing device can be a mobile phone, a tablet computer, a laptop, an eye tracker, a handheld computer, a vehicle-mounted electronic device, a Mobile Internet Device (MID), an augmented reality (AR)/virtual reality (VR) device, a robot, a wearable device, an ultra-mobile personal computer (UMPC), a netbook, or a personal digital assistant (PDA), etc. It can also be a server, a Network Attached Storage (NAS), a personal computer (PC), a television (TV), a teller machine, a self-service machine, etc., which is not specifically limited in the embodiments of the present disclosure. In an optional example, an edge deployment scheme that deploys the human-factors intelligence user gaze analysis apparatus as an edge computing device or component on an end side can migrate at least part of the computing tasks to an end-side device, leveraging advantages of edge computing to improve data processing efficiency, and reducing latency as well as occupation of and dependence on network resources. Also, it is beneficial for data security and privacy protection.

The human-factors intelligence user gaze analysis apparatus according to the embodiments of the present disclosure can be a device having an operating system. The operating system can be a Windows operating system, an Android operating system, an IOS operating system, or other possible operating systems, which are not specifically limited in the embodiments of the present disclosure.

In some embodiments, as illustrated in FIG. 6, the embodiments of the present disclosure further provide an edge computing device 600 including a processor 601, a memory 602, and a computer program stored in the memory 602 and executable on the processor 601. When the program is executed by the processor 601, each process of the above-described human-factors intelligence user gaze analysis method embodiments can be implemented, and the same technical effect can be achieved. Details thereof will not be omitted here to avoid repetition.

It should be noted that, the edge computing device according to the embodiments of the present disclosure includes the mobile edge computing device and the non-mobile edge computing device described above.

In some embodiments of the present disclosure, the edge computing device can be a head-mounted edge computing device. The head-mounted edge computing device includes a camera and an eye tracker.

In some embodiments, the embodiments of the present disclosure provide a human-factors intelligence user gaze analysis system including a target screen and the above-described edge computing device.

The embodiments of the present disclosure further provide a computer-readable storage medium. The computer-readable storage medium has a program or instructions stored thereon. The program or instructions, when executed by a processor, implements each process of the human-factors intelligence user gaze analysis method embodiments described above, and can achieve the same technical effects. Details thereof will not be omitted here to avoid repetition.

The processor is a processor in the edge computing device described in the above embodiments. The readable storage medium includes a computer-readable storage medium such as a computer read-only memory (ROM), a random access memory (RAM), a magnetic disk, or an optical disk.

The embodiments of the present disclosure further provide a computer program product including a computer program. The computer program, when executed by the processor, implements the above-described human-factors intelligence user gaze analysis method.

The processor is a processor in the edge computing device described in the above embodiments. The readable storage medium includes a computer-readable storage medium such as a computer read-only memory (ROM), a random access memory (RAM), a magnetic disk, or an optical disk.

The embodiments of the present disclosure further provide a chip including a processor and a communication interface coupled to the processor. The processor is configured to run a program or instructions to implement each process in the human-factors intelligence user gaze analysis method embodiments, and can achieve the same technical effect. Details thereof will not be omitted here to avoid repetition.

It should be understood that, the chip mentioned in the embodiments of the present disclosure can also be referred to as a system-level chip, a system-chip, a chip system, or a system-on-chip.

Further, in the present disclosure, it should be noted that terms "comprise", "include" or any other variations thereof are meant to cover non-exclusive including, such that the process, method, goods or device including a series of elements do not only include those elements, but further include other elements that are not explicitly listed, or further include inherent elements of the process, method, goods or device. In a case that there are no more restrictions, an element limited with the statement "comprises a ..." does not exclude the presence of additional identical elements in the process, method, goods or device that includes the said element. In addition, it should be noted that the scope of the methods and devices in the embodiments of the present disclosure is not limited to performing functions in the order shown or discussed, and can also include performing functions in a substantially simultaneous manner or in the reverse order according to the functions involved. For example, the described methods can be performed in an order different from that described, and various operations can be added, omitted, or combined. In addition, features described with reference to certain examples can be combined in other examples.

From the above description of the implementations, it will be clear to those skilled in the art that the method in the above embodiments can be implemented with the aid of software and a necessary common hardware platform or can be implemented through hardware. In many cases, the former one is a better implementation. Based on this understanding, all of the technical solutions according to the embodiments of the present disclosure, or the part thereof that contributes to the related art, can be embodied in the form of a computer software product. The computer software product can be stored in a storage medium (such as a ROM/RAM, a disk, and an optical disk) and contain instructions to enable a terminal device (which can be a mobile phone, a computer, a server, a network device, etc.) to perform the method described in each of the embodiments of the present disclosure.

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure. These variations are to be encompassed by the protect scope of present disclosure.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Further, the particular features, structures, materials, or characteristics can be combined in any suitable manner in one or more embodiments or examples.

**Claims**

1. A human-factors intelligence user gaze analysis method, comprising:

   collecting visual data of a user's field of view through a camera of a head-mounted device, and collecting eye movement data of the user within the field of view through an eye tracker of the head-mounted device;
   identifying a target object in the visual data;
   determining target eye movement data associated with gaze on the target object in the eye movement data; and
   sending the target eye movement data to a target screen to correspondingly present the target eye movement data on the target object displayed on the target screen.

2. The method according to claim 1, further comprising:

   determining a two-dimensional marker to be used based on a scene; and
   deploying the two-dimensional marker at a key point of the target object, and recording a corresponding relationship among the target object, the key point, and the two-dimensional marker;
   wherein said identifying the target object in the visual data comprises:

      locating a position of the target object in the visual data based on a position of the two-dimensional marker in the visual data and the corresponding relationship;
      wherein said determining the two-dimensional marker to be used based on the scene comprises:

         determining a size of a blank area in the two-dimensional marker based on the scene; the blank area being an area between an edge of the two-dimensional marker and a background area of the two-dimensional marker; and
         determining the two-dimensional marker to be used based on the size of the blank area; and/or
         wherein said determining the two-dimensional marker to be used based on the scene comprises:

            determining an area ratio of a background area in the two-dimensional marker to the two-dimensional marker based on the scene; and
            determining the two-dimensional marker to be used based on the area ratio.

3. The method according to claim 2, wherein the target object comprises a plurality of key points, and said deploying the two-dimensional marker at the key point of the target object comprises:

   selecting a plurality of non-collinear key points from the target object; deploying the two-dimensional marker at each of the plurality of non-collinear key points, and recording a corresponding relationship among the target object, each of the plurality of non-collinear key points, and the two-dimensional marker; or
   selecting a plurality of key points from the target object to form a polygon; deploying the two-dimensional marker at each of the plurality of key points that form the polygon, and recording a corresponding relationship among the target object, each of the plurality of key points that form the polygon, and the two-dimensional marker.

4. The method according to claim 2, wherein said locating the target object based on the position of the two-dimensional marker in the visual data and the corresponding relationship comprises:

performing feature extraction on the visual data; detecting the two-dimensional marker comprised in the visual data and the position of the two-dimensional marker in the visual data based on an extracted feature; locating the target object in the visual data based on the corresponding relationship and a detection result of the two-dimensional marker and the position of the two-dimensional marker in the visual data; or

obtaining, in response to detecting that the number of two-dimensional markers in the visual data is less than the number of deployed two-dimensional markers, a position of an undetected two-dimensional marker by fitting based on a geometric positional relationship of the key point; and locating the target object based on a position of a detected two-dimensional marker in the visual data, the obtained position of the undetected two-dimensional marker, and the corresponding relationship.

5. The method according to claim 1, wherein said sending the target eye movement data to the target screen to correspondingly present the target eye movement data on the target object displayed on the target screen comprises:

obtaining position information of the target eye movement data on the target object;
performing identification on the visual data to obtain position information of each marker pre-marked on the target object;
determining a transformation relationship based on the position information of each marker; and
substituting the position information of the target eye movement data on the target object into the transformation relationship to obtain target coordinates of the target eye movement data on the target object in the target screen.

6. The method according to claim 5, wherein said determining the transformation relationship based on the position information of each marker comprises:

determining a first parameter set for calculating an abscissa of the target coordinates, a second parameter set for calculating an ordinate of the target coordinates, and a third parameter set for calculating a homogeneous coordinate normalization factor based on the position information of each marker;
determining an expression of a first intermediate variable based on the third parameter set;
obtaining a first expression for calculating the abscissa of the target coordinates based on the expression of the first intermediate variable and the first parameter set; and
obtaining a second expression for calculating the ordinate of the target coordinates based on the expression of the first intermediate variable and the second parameter set, the first expression and the second expression constituting the transformation relationship.

7. The method according to claim 5, wherein:
said performing identification on the visual data to obtain the position information of each marker pre-marked on the target object comprises:

identifying a marker area of each marker pre-marked on the target object from the visual data; and
determining center point coordinates of each marker area in a coordinate system established based on the visual data to obtain the position information of each marker;
wherein said determining the center point coordinates of each marker area comprises:
for each marker area in the visual data, determining coordinates of each point in a contour of the marker area, and calculating average coordinates of all points in the contour of the marker area to obtain the center point coordinates of the marker area.

8. The method according to claim 1, wherein said sending the target eye movement data to the target screen to correspondingly present the target eye movement data on the target object displayed on the target screen comprises:

obtaining a first image block comprising the target eye movement data in a first video frame of the visual data;
calculating, in response to the first image block satisfying a predetermined condition, a coordinate mapping relationship between the first video frame and a second video frame in the target screen based on the first image block; and
mapping the target eye movement data to the second video frame based on the coordinate mapping relationship.

9. The method according to claim 8, wherein said obtaining the first image block comprising the target eye movement data in the first video frame of the visual data comprises:

determining a position of the target eye movement data in the first video frame; and

determining an area within a first predetermined range centered on the position of the target eye movement data in the first video frame as the first image block;

wherein:

the predetermined condition comprises: the number of matching points in an image block being greater than or equal to a predetermined number, and/or a plurality of matching points in the image block being not collinear; the method further comprises: obtaining, in response to the first image block not satisfying the predetermined condition, a second image block comprising the target eye movement data in the first video frame; calculating, in response to the second image block satisfying the predetermined condition, the coordinate mapping relationship between the first video frame and the second video frame in the target screen based on the second image block.

10. The method according to claim 8, wherein said obtaining the second image block comprising the target eye movement data in the first video frame comprises:

determining a position of the target eye movement data in the first video frame; determining the area within a second predetermined range centered on the position of the target eye movement data in the first video frame as the second image block; the second predetermined range being larger than a first predetermined range.

11. The method according to claim 8, further comprising, prior to obtaining the first image block comprising the target eye movement data in the first video frame of the visual data:

performing feature point matching on the first video frame and the second video frame in the target screen, and reselecting, in response to a matching failure between the first video frame and the second video frame, a video frame from the visual data to replace the first video frame and performing the feature point matching on the reselected video frame and the second video frame;

wherein said reselecting the video frame from the visual data to replace the first video frame and performing the feature point matching on the reselected video frame and the second video frame comprises:

determining a video frame adjacent to the first video frame in the visual data or another video frame in the visual data as the reselected video frame; or

wherein:

said performing the feature point matching on the first video frame and the second video frame in the target screen comprises: inputting the first video frame and the second video frame into a predetermined neural network model, such that the neural network model extracts feature points of the first video frame and the second video frame and performs matching based on extracted feature points; or

said performing the feature point matching on the first video frame and the second video frame in the target screen comprises: preprocessing the first video frame and the second video frame, wherein the preprocessing comprises removing feature points within a predetermined range of a boundary of the first video frame and removing feature points within a predetermined range of a boundary of the second video frame; and performing feature point matching on a pre-processed first video frame and a pre-processed second video frame; and/or inputting the pre-processed first video frame and the pre-processed second video frame into a predetermined neural network model, such that the neural network model extracts feature points of the preprocessed first video frame and the preprocessed second video frame and performs matching based on extracted feature points.

12. The method according to claim 11, further comprising:

storing the feature point of the second video frame extracted by the neural network model;

wherein said reselecting the video frame from the visual data to replace the first video frame and performing feature point matching on the reselected video frame and the second video frame comprises:

inputting a first video frame after replacing into a predetermined neural network model, such that the neural network model extracts a feature point of the first video frame and performs matching based on the feature point of the first video frame and the stored feature point of the second video frame.

13. The method according to claim 8, wherein said calculating the coordinate mapping relationship between the first video frame and the second video frame in the target screen based on the first image block comprises:

obtaining first position coordinates of a matching point in the first image block in the first video frame and second position coordinates of the matching point in the second video frame; and

calculating a homography matrix corresponding to the matching point based on the first position coordinates and the second position coordinates, the homography matrix representing the coordinate mapping relationship.

14. The method according to claim 1, further comprising:

obtaining target eye movement data of a plurality of users associated with gazes on a same target object; and analyzing a multi-user gaze behavior based on the target eye movement data corresponding to the plurality of users;

wherein said analyzing the multi-user gaze behavior based on the target eye movement data corresponding to the plurality of users comprises:

sending the target eye movement data corresponding to the plurality of users to the target screen, to superimpose and present the target eye movement data corresponding to the plurality of users at the target object displayed on the target screen; and/or

wherein said analyzing the multi-user gaze behavior based on the target eye movement data corresponding to the plurality of users comprises:

analyzing an eye movement trajectory and/or an eye movement point heat map of the plurality of users based on the target eye movement data corresponding to the plurality of users, to obtain a primary viewing position of the plurality of users and a habitual operation process of the plurality of users when performing a predetermined operation; and

optimizing a scene based on the primary viewing position of the plurality of users and the habitual operation process of the plurality of users when performing the predetermined operation.

15. An edge computing device, comprising:

a processor; and

a memory having a program or instructions executable on the processor stored thereon, wherein the program or instructions, when executed by the processor, implements the human-factors intelligence user gaze analysis method according to any one of claims 1 to 14.

Collecting visual data of a user's field of view through a camera of a head-mounted device, and collecting eye movement data of the user within the field of view through an eye tracker of the head-mounted device ⟍⟋ 110

Identifying a target object in the visual data ⟍⟋ 120

Determining target eye movement data associated with gaze on the target object in the eye movement data ⟍⟋ 130

Sending the target eye movement data to a target screen to correspondingly present the target eye movement data on the target object displayed on the target screen ⟍⟋ 140

FIG. 1

Blank area

Background area

FIG. 2

Field of view partition

Target object partition

FIG. 3

First video frame

First video frame

Coordinate mapping

Second video frame

Sceond video frame

FIG. 4

| Collection module | Identification module | Determination module | Display module |
|---|---|---|---|

— 510    — 520    — 530    — 540

FIG. 5

— 600

Edge computing device

— 601    — 602

Processor   ⟺   Memory

FIG. 6

## EUROPEAN SEARCH REPORT

**Application Number**

**EP 25 20 2352**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 651 270 A (BEIJING 7INVENSUN TECH CO LTD) 13 April 2021 (2021-04-13) | 1,5-7, 14,15 | INV. |
| A | * abstract; figures 1-6 * * paragraphs [0003], [0057], [0073] - [0103], [0115], [0155], [0162], [0163], [0208] - [0210], [0247] - [0258] * | 2-4 | G06F3/01 G06T7/33 G06V10/25 G06V10/44 G06V20/20 |
| | ----- | | |
| X | US 2019/073025 A1 (SCHMIDT EBERHARD [DE] ET AL) 7 March 2019 (2019-03-07) | 1,14,15 | |
| Y | * abstract; figures 1-5 * * paragraphs [0001] - [0008], [0013], [0014], [0033] - [0040], [0045] - [0048], [0068], [0069] * | 8-13 | |
| | ----- | | |
| Y | CN 118 762 067 A (KINGFAR INT INC) 11 October 2024 (2024-10-11) | 8-13 | |
| A | * abstract; figures 1-9 * * paragraphs [0001], [0032] - [0035], [0040] - [0076], [0084], [0085], [0101] - [0110], [0126] * | 1,15 | |
| | ----- | | TECHNICAL FIELDS SEARCHED (IPC) |
| A | US 2014/003738 A1 (WILLIAMS DENIS [DE] ET AL) 2 January 2014 (2014-01-02) * abstract; figures 1,2 * * paragraphs [0077] - [0108], [0115] - [0141] * | 1,8-15 | G06F G06T G06V A61B G06Q |
| | ----- | | |
| A | CN 211 373 529 U (SHANGHAI BOFA SPACE INFORMATION TECH CO LTD) 28 August 2020 (2020-08-28) * abstract; figures 1, 2 * * paragraph [0021] * | 7 | |
| | ----- | | |

The present search report has been drawn up for all claims

| Place of search | Date of completion of the search | Examiner |
|---|---|---|
| Munich | 12 February 2026 | Köhn, Andreas |

EPO FORM 1503 03.82 (P04C01)

**EP 4 742 010 A1**

## ANNEX TO THE EUROPEAN SEARCH REPORT
## ON EUROPEAN PATENT APPLICATION NO.

EP 25 20 2352

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| CN 112651270 | A | 13-04-2021 | NONE | | |
| US 2019073025 | A1 | 07-03-2019 | US | 2019073025 A1 | 07-03-2019 |
| | | | WO | 2017153355 A1 | 14-09-2017 |
| CN 118762067 | A | 11-10-2024 | NONE | | |
| US 2014003738 | A1 | 02-01-2014 | CN | 103501688 A | 08-01-2014 |
| | | | EP | 2499963 A1 | 19-09-2012 |
| | | | JP | 2014509535 A | 21-04-2014 |
| | | | US | 2014003738 A1 | 02-01-2014 |
| | | | WO | 2012126844 A1 | 27-09-2012 |
| CN 211373529 | U | 28-08-2020 | NONE | | |

EPO FORM P0459

For more details about this annex : see Official Journal of the European Patent Office, No. 12/82